# EUROPÄISCHE PATENTSCHRIFT

(11) **EP 3 134 756 B1**
(45) Veröffentlichungstag und Bekanntmachung des Hinweises auf die Patenterteilung: **30.08.2017**
(21) Anmeldenummer: 15794094.1
(22) Anmeldetag: 23.10.2015
(51) Int. Cl.: G02B 5/08

(54) **TEMPERATUR- UND KORROSIONSSTABILER OBERFLÄCHENREFLEKTOR**
TEMPERATURE- AND CORROSION-STABLE SURFACE REFLECTOR
RÉFLECTEUR DE SURFACE RÉSISTANT À LA CHALEUR ET À LA CORROSION

(30) Priorität: 27.10.2014 DE 102014115602; 20.02.2015 DE 102015102496
(43) Veröffentlichungstag der Anmeldung: 01.03.2017
(73) Patentinhaber: Almeco GmbH, 06406 Bernburg (DE)
(72) Erfinder: DASBACH, Reinhard, 06406 Bernburg (DE)
(74) Vertreter: Strehl Schübel-Hopf & Partner
(86) Internationale Anmeldenummer: PCT/EP2015/074674
(87) Internationale Veröffentlichungsnummer: WO 2016/066562

(56) Entgegenhaltungen:
- EP-A1- 2 530 496
- EP-B1- 0 918 234
- DE-A1-102006 030 094
- DE-C- 930 428
- US-A1- 2002 076 568

## Beschreibung

### Gebiet der Erfindung

Die vorliegende Erfindung betrifft ein temperaturbeständiges Schichtsystem mit hohem Reflexionsvermögen im Wellenlängenbereich zwischen 300 und 2700nm, das auf einem metallischen Substrat angeordnet ist und eine metallische Spiegel- oder Reflektorschicht mit einem darüber angeordneten reflexionserhöhenden "Wechselschichtsystem" aus einer dielektrischen LI-Schicht (Low-Index-Schicht) mit einem Brechungsindex n1 und einer darüber angeordneten dielektrischen HI-Schicht (High-Index-Schicht) mit einem gegenüber n1 höheren Brechungsindex n2 aufweist, und dessen Anwendung als temperatur- und korrosionsstabiler Oberflächenreflektor. Zwischen dem Substrat und der Reflektorschicht befindet sich mindestens eine Schicht, die sowohl zur Verbesserung der Haftung der Metallschicht des Spiegels als auch als Diffusionsbarriere vorgesehen ist und die die Diffusion sowohl von Atomen aus dem Substrat in die Reflektorschicht als auch von Atomen aus der Reflektorschicht in das Substrat unterdrückt. Eine solche Diffusion würde bei den hohen Temperaturen, die in den für den Oberflächenreflektor vorgesehenen Einsatzgebieten auftreten, ansonsten verstärkt und beschleunigt auftreten und zu einer Reduktion des Reflexionsvermögens der Reflektor- oder Spiegelschicht führen. Zur Verbesserung der Temperaturstabilität sind darüber hinaus zwischen der genannten Diffusionsbarriere und der Reflektorschicht jeweils weitere Schutzschichten vorgesehen, die ggf. auch die Agglomeration der Reflektorschicht unterdrücken. Zur Verbesserung der Temperatur- und Korrosionsstabilität sind auch zwischen der Reflektorschicht und dem LI/HI-Schichtsystem weitere Schutzschichten vorgesehen, die die Reflektorschicht vor Oxidation, Agglomeration und Diffusion in die darüber liegenden Schichten schützt. Die Schichten des erfindungsgemäßen Schichtsystems sind im Übrigen so ausgestaltet, dass sie gut aneinander bzw. am Substrat haften und dass der Oberflächenreflektor eine gute Abriebfestigkeit und Korrosionsbeständigkeit besitzt.

### Stand der Technik

Oberflächenreflektoren und vergleichbare Gegenstände werden häufig auf Basis von Aluminium hergestellt. Das Rohaluminium sollte möglichst rein sein, beispielsweise einen Reinheitsgrad von 99,8% aufweisen, um eine hohe Reflexion zu erzielen. Da reines Aluminium jedoch sehr weich ist, werden bevorzugt sogenannte walzplattierte Materialien verwendet. Dabei wird reines Aluminium einseitig oder beidseitig auf eine Aluminiumlegierung mit gewünschten mechanischen Eigenschaften aufgewalzt. Die hohe Reinheit ist deshalb so wünschenswert, weil enthaltene Verunreinigungen beim Bearbeiten, z.B. in Entfettungsbädern, oder beim elektrochemischen Polieren Lochfraß verursachen, so dass der diffuse Reflexionsanteil höher wird, was in den vorgesehenen Einsatzgebieten nicht erwünscht ist.

Eine ungeschützte Aluminiumoberfläche reagiert schnell unter Umwelteinflüssen und besitzt dann eine mäßige Reflexion: In trockener Atmosphäre bildet sich Aluminiumoxid, bei Feuchtigkeit Aluminiumhydroxid (Bayerit) bzw. oberhalb 75°C Aluminiummetahydroxid (Böhmit). Daneben ist die ungeschützte Aluminiumoberfläche sehr kratzempfindlich. Um eine hohe Reflexion zu erhalten und die Aluminiumoberfläche zu schützen, werden üblicherweise folgende Arbeitsschritte durchgeführt: Durch Anlegen einer Spannung in einem chemischen Bad wird die Oberfläche elektrochemisch geglänzt, wobei sie unter Abtragung von Material glatter wird und die undefinierten Reaktionsprodukte abgetragen werden, so dass man eine reine Aluminiumoberfläche erhält, was sich in einer höheren Reflexion mit geringerem diffusem Reflektionsanteil niederschlägt. Das so behandelte Aluminium wird sodann üblicherweise einem Anodisierungsprozess unterworfen. Dabei wächst eine Hydroxygruppen enthaltende Schicht von außen nach innen, also in Richtung Substratkern. Es entsteht eine poröse Aluminiumoxidschicht. Zum Verschließen der Poren wird häufig ein warmes Wasserbad eingesetzt. Diese Aluminiumoxidschicht besitzt eine viel höhere mechanische Härte als die ungeschützte Aluminiumoberfläche, so dass die Spiegeloberfläche resistent gegen Kratzer ist. Es besitzt aufgrund der Dicke der Aluminiumoxidschicht von etwa 0,4 - 2 µm, meist etwa 0,5 bis 2 µm, unerwünschte Interferenzen des reflektierten Lichtes und außerdem wird durch Verunreinigungen in der Aluminiumoxidschicht ein Teil des Lichtes gestreut bzw. absorbiert. Daher besitzt das Produkt eine Totalreflexion von nur ca. 84 bis 90% (nach DIN 5036-3).

Für einige Anwendungsbereiche sind die so erzielten Reflexionsgrade zu gering. Daher wurden im Stand der Technik viele Mehrlagenschichtsyteme mit einem höheren Reflexionsgrad vorgeschlagen, die sich aus einer geeigneten Kombination von metallischen und transparenten - meist dielektrischen - Schichten mittels bekannter Dünnfilm-Beschichtungsverfahren wie zum Beispiel PVD, CVD oder PECVD abscheiden lassen. So ist es z. B. aus EP 0 456 488 A1 und EP 0 583 871 A1 bekannt, dass das Gesamtreflexionsvermögen eines Spiegelschichtsystems durch Aufbringen eines dielektrischen LI-HI-Schichtverbundes aus Schichten mit abwechselnd niedriger und hoher Brechzahl auf eine metallische Reflexionsschicht erhöht werden kann. Werden diese auf metallische Substrate abgeschieden, die eine relativ geringe mechanische Härte aufweisen, so sind diese Schichtsysteme sehr empfindlich gegenüber mechanischen Beschädigungen, auch wenn viele der üblicherweise eingesetzten dielektrischen Schichten eine sehr hohe Härte besitzen. Bei mechanischem Einwirken können diese nämlich in die weiche Metalloberfläche eingedrückt werden. Daher ist es vorteilhaft, diese Schichtsysteme auf eine anodisierte Aluminiumoberfläche mit hoher Härte abzuscheiden. Die so hergestellten Reflektoren sind wesentlich unempfindlicher gegen mechanische Beschädigung.

Zur Erhöhung der Reflexion und um die ungewünschten Interferenzen zu unterdrücken, wird die Aluminiumoxidschicht zunächst mit einer sogenannten Spiegelschicht oder Reflektorschicht aus einem Metall beschichtet. Diese muss eine Dicke besitzen, die die Schicht "optisch dicht" macht, die also verhindert, dass auftreffende Strahlung durch die Schicht hindurchtritt und in die darunterliegenden Schichten gelangt, sodass es zu Interferenzeffekten in der Aluminiumoxidschicht kommen kann. Dies würde die Effizienz des Spiegels verringern und zu unerwünschten Interferenzfarben führen. In der US-PS 5 527 562 wird als Grundlage für eine PVD Beschichtung das Aufbringen eines siliciumorganisches Sol und in der EP 0 918 234 B1 eines Lacks auf das Aluminiumsubstrat vorgeschlagen, um auf die Anodisierungsschicht verzichten zu können. Die EP 0918 234 B1 erwähnt hingegen keine Haftschicht, die auf die Anodisierungsschicht vor Abscheidung der Reflektorschicht aufgebracht werden muss. Als Material für die Reflektorschicht dient häufig hochreines Aluminium oder Silber, da beide Materialien schon einen hohen intrinsischen Reflexionsgrad aufweisen.

Die WO 2007/095876A1 erwähnt eine Haftschicht, die auf die Anodisierungsschicht aufgebracht wird, bevor eine erste funktionale Reflexionsschicht mit einer Dicke < 90nm aufgebracht wird, die nicht optisch dicht ist. Über dieser wird eine zweite Haftvermittlerschicht aufgetragen, bevor eine zweite funktionelle Reflexionsschicht mittels Elektronenstrahlverdampfung aufgebracht wird. Durch Kombination der beiden nicht optisch dichten Reflexionsschichten soll ein optisch dichtes Reflionsschichtsystem erzeugt werden. Der Vorteil soll sein, dass die zweite Reflexionsschicht nun mittels Elektronenstrahlverdampfung aufgebracht werden kann. Ohne die erste funktionelle Reflexionsschicht könne eine optisch dichte Reflexionsschicht nur mittels Sputterverfahren abgeschieden werden.

Um die Reflexion der Metallschicht noch zu erhöhen, wird im Stand der Technik über die Reflektorschicht in der Regel ein Schichtsystem aus transparenten Materialien und in Dicken angeordnet, die zu einer konstruktiven Interferenz des reflektierten Lichtes führen, wodurch die Reflexion der Metallschicht noch erhöht und außerdem die Reflexionsschicht vor Umwelteinflüssen geschützt wird. Da diese Schichten wesentlich dünner als die durch Anodisieren erzeugten Aluminiumoxidschichten sind, werden unerwünschten Interferenzen weitgehend vermieden. Üblicherweise besteht dieses System aus der bereits oben erwähnten unteren Schicht mit einem geringeren Brechungsindex (LI-Schicht) und einer oberen Schicht mit höherem Brechungsindex (HI-Schicht). Die hierfür einsetzbaren Materialien sind bekannt; ein häufiges Schichtpaar besteht aus Siliciumoxid für die LI-Schicht und Titandioxid für die HI-Schicht. Durch das Vorsehen dieser Schichten und die genaue Abstimmung der Schichtdicken erzielt man außerdem eine wünschenswert hohe Reflexion für einfallende Strahlung im Bereich zwischen 300 und 2700 nm. WO 2006/033877 schlägt für einen derartigen Spiegel mit der Abfolge Glas/Aluminium/SiO₂/TiO₂ zur Verbesserung der Haftung des Aluminiums auf dem Glas und an der dielektrischen Überschichtung und damit letztendlich zur Verbesserung der mechanischen Eigenschaften vor, unter der Aluminiumschicht eine Metalloxidschicht, insbesondere eine Aluminiumoxidschicht, aufzubringen. Diese Schicht kann derart gradiert sein, dass der Aluminiumgehalt in Richtung der Aluminiumschicht steigt und der Sauerstoffgehalt in Richtung Substrat steigt. Eine derartige Aluminiumoxidschicht kann auch zwischen der Aluminiumschicht und der dielektrischen Überschichtung angeordnet sein. In einer in US 7,678,459 beschriebenen Alternative wird anstelle von Aluminiumoxid ein ggf. gradiertes SiAlOₓ eingesetzt.

Bei den meisten dieser vorgeschlagenen Reflektorschichtsysteme geht es darum, eine möglichst hohe Reflexion im Bereich des sichtbaren Lichtes zu erzielen, um sie als Reflektor für Beleuchtungszwecke einzusetzen. Eine besondere Temperatur- oder Korrosionsstabilität wird in der Regel nicht verlangt.

Gemäß EP 0 762 152 soll eine dünne Eloxalschicht, die eine Dicke von maximal 75 nm haben soll, gleichzeitig als Schutz gegen mechanische und chemische Einflüsse und als niedrigbrechende Schicht des LI-HI-Schichtsystems, also beispielsweise als Ersatz für SiO₂, eingesetzt werden. Diese Reflektoren sollen sich "besonders als Reflektoren für Infrarot-Strahlung oder für Leuchten in der Lichttechnik und insbesondere in der Tageslichttechnik" eignen.

Bei einigen Anwendungen kann es aber vorkommen, dass die Reflektorschichtsysteme im Dauerbetrieb hohen Temperaturen ausgesetzt sind: z. B. beim Einsatz als Solarspiegel, Spiegel für Hochleistungsstrahler (z. B. Flutlicht), als Laserspiegel, oder als Substrate für LED-Chips.

Hierbei kann es dazu kommen, dass die metallische Reflektorschicht oxidiert oder die Atome der Reflektorschicht in die darüber oder darunter angebrachten Schichten diffundieren. Des Weiteren kann es insbesondere bei der Verwendung von Silber als Reflektorschicht zu Agglomeration des Silbers kommen, wodurch die Reflexion des Schichtsystems vermindert wird.

Aufgrund der hohen Temperaturen können auch die Bestandteile der Haftschichten oder der optischen Schichten über der Reflektorschicht in die Reflektorschicht diffundieren. Diese Effekte führen in der Regel zu einer unerwünschten Abnahme des Reflexionsvermögens des Reflektorschichtsystems.

So werden beispielsweise Solarspiegel häufig für Fresnel-Kraftwerke eingesetzt. Dabei können z.B. Primärspiegel das Sonnenlicht einfangen und auf Absorber-Rohre konzentrieren, die mit einer erwärmbaren Flüssigkeit gefüllt sind. Um die Ausbeute des Sonnenlichts zu erhöhen, wird dabei hinter dem Absorber-Rohr häufig ein zweiter Spiegel (Sekundärspiegel) angebracht. Dieser befindet sich in großer Nähe zum Rohr und wird sehr heiß; er muss Temperaturen von ca. 250°C bis 300°C im Dauerbetrieb aushalten. Unter solchen Bedingungen sind die Reflektorschichten aus den oben genannten Gründen nicht lange haltbar. Um hier Abhilfe zu schaffen, wird in EP 2 418 521 A2 vorgeschlagen, die Reflektorschicht wegzulassen. Damit dies gelingen kann, muss das Substrat selbst bzw. in Kombination mit darauf befindlichen Schichten die gewünschten reflektierenden Eigenschaften aufweisen. Dies wird durch den Einsatz von elektrochemisch geglänztem, hochreinem Aluminium als Substrat bewirkt, dessen Anodisierung so erfolgt, dass eine 20 bis 100 nm dicke, sehr dichte, harte, porenfreie Aluminiumoxid-Barriereschicht ausgebildet wird. Auf dieser kann dann mittels PVD-Verfahren das übliche Schichtsystem aus LI- und HI- Schichten aufgebracht werden, wobei ein Spiegel mit verbesserter Hitzebeständigkeit entsteht. Um die Kratzfestigkeit dieses Spiegels zu verbessern, kann das Schichtsystem aus LI- und HI-Schichten mit einer wärmeemittierenden oder mechanisch schützenden Beschichtung versiegelt werden, beispielsweise mit einer Sol-Gel-Beschichtung, während die Rückseite des Spiegels mit einer ebenfalls wärmeemittierenden Schicht, beispielsweise bestehend aus einer 3 bis 5 µm dicken Anodisierungsschicht des Aluminiumsubstrats, versehen wird, wie aus EP 2 530 496 A1 hervorgeht. Wenn es allerdings darum geht, höchste Reflexionsgrade zu erzielen, kann oft nicht auf eine Reflektorschicht aus einem hochreinen Metall verzichtet werden. Beispielsweise ist eine solare Reflexion von größer 92% nur durch die Verwendung von einer Reflektorschicht aus Silber möglich. So beansprucht die US 5,019,458 Solarspiegel mit einer solaren Reflexion von 95,5% auf einem Glassubstrat, bei der die Reflektorschicht aus Silber zwischen eine Schicht aus NiCr und ZnS eingebettet ist. Die Reflexion soll sich über eine Woche bei 95-100% r.H.; 140°F (60°C) nicht verändern, d. h. die vorgesehenen Arbeitstemperaturen sind nicht ungewöhnlich hoch.

Auch werden temperaturstabile hochreflektierende Spiegelsysteme mit einer Totalreflexion größer 95% für andere Anwendungen als im Solarbereich benötigt. Auch hier muss als Reflektorschicht Silber verwendet werden. So werden LED-Chips mit einer größeren Anzahl von LEDs häufig auf einem spiegelnden Substrat montiert, um die Lichtausbeute zu erhöhen, sogenannte "MC-COB" (englisch: Metal Core - Chip On Board). Auf dem Substrat werden Areale mit Folien in die Leiterbahnen integriert sind, sogenannten "PCBs" (englisch: Printed Circuit Board) oder dergleichen angeordnet, die z.B. Ausnehmungen aufweisen. In den Ausnehmungen befinden sich jeweils einzelne LEDs, die direkt auf den Oberflächenreflektor aufgeklebt werden.

Der Chip wird mit einem Polymer oder dgl. vergossen, das einen "Phosphor", d.h. eine lumineszierende Substanz aufweisen kann. Das spiegelnde Substrat besteht in der Regel aus einem silberbeschichteten Kupferblech, einem relativ teuren Material. Dessen thermische Beständigkeit lässt zu wünschen übrig, was große Nachteile hat, denn derartige LED-Chips können Temperaturen von um die 150°C entwickeln und sollten eine Lebensdauer von mindestens 20.000 Stunden aufweisen. Auch ein Schichtverbund auf Basis von Aluminium wurde bereits vorgeschlagen, siehe z.B. DE 20 2011 050 976 U1, worin der Schichtverbund mit einer elektrisch isolierenden Schicht mit einer hohen Durchschlagfestigkeit abschließen soll, um eine gute Wärmeableitung, gleichzeitig aber auch eine hohe Lichtausbeute zu ermöglichen. Der Licht-Reflexionsgrad nach DIN 5036-3 wird dabei als "typischerweise bei 92,0%" angegeben.

Im Bereich der Fensterverglasung, wo oft sehr dünne metallische Spiegelschichten vorwiegend aus Silber verwendet werden, wird vorgeschlagen, die metallische Spiegelschicht durch zusätzliche unter und über der Spiegelschicht angebrachte Schutzschichten vor Oxidation, Agglomeration und Diffusionsprozessen zu schützen. Bei solchen Schichtsystemen geht es allerdings nicht darum, eine möglichst hohe Gesamtreflexion über den gesamten Wellenlängenbereich der Solarstrahlung (300 - 2700nm) zu erzielen, vielmehr geht es darum, eine hohe Transmission im sichtbaren Spektralbereich, dagegen eine hohe Reflexion im Infraroten Spektralbereich zu erzielen, um eine möglichst guten Energiegewinn durch Solarstrahlung bei gleichzeitig geringen Verlusten durch Wärmestrahlung für Gebäude, die mit so beschichteten Fenstern ausgestattet sind, zu erzielen (so genannte Low-E-Beschichtung).

Um die hohe Transmission im sichtbaren Spektralbereich gewährleisten zu können, müssen die eingesetzten Silberschichten sehr dünn sein (<50nm), d. h. sie sind auf keinen Fall optisch dicht. Damit sind sie besonders empfindliche gegen Korrosion, sie müssen jedoch keinen hohen Temperaturen widerstehen.

So beschreibt DE 33 07 661 A1 eine Schichtfolge auf einer Glasscheibe, bei der unter einer mit einer Dicke von 5 bis 50 nm aufgebrachten Silberschicht und damit unmittelbar auf der Glasscheibe eine Indiumoxid- oder Zinnoxidschicht und oberhalb der genannten Silberschicht ein Metall, ausgewählt unter Al, Ti, Ta, Cr, Mn und Zr, in einer Dicke von 2 nm aufgebracht wird, die die Agglomeration von Silber unterdrücken soll, worauf sich eine nochmalige Indiumoxid- oder Zinnoxidschicht anschließt. Eine ähnliche Schichtabfolge wird in EP 0 104 870 offenbart. In EP 1 174 397 B1 wird vorgeschlagen, Windschutzscheiben für Autos und dergleichen mit einer niedrig emittierende ("low-E") Schichtabfolge zu versehen, die mindestens eine IR-reflektierende Silberschicht zwischen jeweils zwei Schichten aus Nickel oder einer Nickellegierung aufweist, die jeweils mindestens teilweise oxidiert sind. Der Sauerstoffgehalt dieser Schichten steigt in der Richtung, die weg von den Silberschichten weist. Zwischen diesem Schichtaufbau und dem Glassubstrat kann sich eine erste, als Antireflexionsschicht dienende dielektrische Schicht, z.B. aus TiOₓ, SiOₓ oder SiₓN_{y} oder dergleichen und eine zweite, als die Streuung vermindernde Schicht dienende dielektrische Schicht befinden, die aus Si₃N₄ oder Silicium in Mischung mit Aluminium und/oder rostfreiem Stahl bestehen kann.
WO 2012/036720 beschreibt einen Aufbau auf einem Glassubstrat, der mindestens eine dielektrische Schicht aus mit Bor dotiertem Zinkoxid die als "seed layer" bezeichnet wird, eine IR-reflektierende Schicht, aus Silber und/oder Gold und eine dielektrische Schicht oberhalb der IR-reflektierenden Schicht aufweist. Diese kann ebenfalls aus mit Bor dotiertem Zinkoxid bestehen; alternativ aus einem Oxid des Nickels und/oder des Chroms. Die mit Bor dotierte Zinkoxidschicht soll die physikalische und chemische Widerstandsfähigkeit der Beschichtung verbessern, ohne deren elektrische und optische Eigenschaften nachteilig zu beeinflussen. Die Silberschichten für Glasscheiben müssen sehr dünn sein, damit der Transmissionsgrad für sichtbares Licht hoch bleibt. Sie müssen jedoch keine hohen Temperaturen aushalten.

Auch für andere Einsatzgebiete werden Schutzschichten für metallische Reflexionsschichten vorgeschlagen:
DE 10 2004 010 689 B3 offenbart einen Solarabsorber mit einer strahlungsselektiven Absorberbeschichtung, die auf einem Metallsubstrat eine Diffusionssperrschicht, eine metallische Reflexionsschicht, eine Cermetschicht und eine Antireflexionsschicht aufweist. Als Diffusionssperrschicht dient eine Oxidschicht, die aus oxidierten Komponenten des Metallsubstrates besteht. Geeignete Materialien für die metallische Reflexionsschicht werden nicht angegeben.

Die DE 10 2005 000 911 A1 offenbart ein "umweltbeständiges Spiegelschichtsystem mit hohem Reflexionsvermögen ("deutlich über 90%") im sichtbaren Spektralbereich zur Abscheidung auf "dielektrischen Substraten" zum Einsatz in optischen Geräten wie Lichtintegratorteilen oder Lichttunnelteilen", die im Strahlengang von LCD- oder DLP-Projektoren verwendet werden können. Hier soll die Spiegelschicht aus Silber zwischen zwei ZnOx Schichten eingebettet werden und dann mit einem zweifachen LI-HI Schichtsystem aus SiO2 und TiO2 in der Reflexion optimiert werden.

Die US 6,078,425 A offenbart ein silberbasiertes Spiegelsystem für Teleskope. Hier wird die Spiegelschicht aus Silber zwischen zwei Ni-CrN Schichten eingebettet und anschließend mit einem LI-HI Schichtsystem versehen.

Die DE930428 offenbart einen Oberflächenreflektor auf Metallsubstrat mit einer Haftschicht aus Chrom und einer darüber liegenden Reflektorschicht aus Al, AlMg oder Ag, die zwischen zwei SiOx Schichten eingebettet ist. Die unter der Reflektorschicht liegende SiOx Schicht soll als Diffusionsbarriere dienen und verhindern, dass bei hohen Temperaturen eine Diffusion zwischen dem Cr und der Reflektorschicht einsetzt und so das Reflexionsvermögen sinkt.

In US 6,222,207 B1 und US 6,593,160 B2 wird die Verwendung von Ni, NiV oder TiW:N als Diffusionsbarriere offenbart, um das Wandern von als Lötmaterial verwendetem Indium in eine Silber-Reflektorschicht eines Rückseiten-Reflektors von Hochleistungs-LED-Chips zu verhindern, wenn diese an einen Systemträger oder dergleichen angelötet werden.

### Detaillierte Beschreibung der Erfindung

Aufgabe der vorliegenden Erfindung ist es, ein temperaturstabiles Schichtsystem mit sehr hoher, gleichmäßiger Reflexion im Bereich des sichtbaren Lichtes und darüberhinausgehend im Bereich der Solarstrahlung von 300 bis 2700nm bereitzustellen. Im Bereich des sichtbaren Lichtes sollte dieses Schichtsystem nach DIN5036 (ASTM E1651) eine Totalreflexion von mindestens 94% und vorzugsweise von mindestens 97%, stärker bevorzugt von mindestens 98%) aufweisen. Für Solarreflektoren sollte dieses Schichtsystem eine solare Reflektion nach ASTM 891-87 von mindestens 89%, und vorzugsweise von mindestens 92%, stärker bevorzug von 95% aufweisen. Der diffuse Reflexionsanteil sollte in spezifischen Ausführungsformen nach DIN 5036-3 (1° Apertur) kleiner als 11%, besonders bevorzugt kleiner als 7% und ganz besonders bevorzugt kleiner als 3% sein.

Das Schichtsystem soll in der Lage sein, als Reflektor z.B. für Anwendungen in LED-Chips (MC-COB), Laserprojektoren oder dergleichen (mit erforderlicher Langzeitstabilität bei Temperaturen von ca. 100 bis ca. 150°C), vorzugsweise aber sogar für Anwendungen als sekundärer Solarspiegel (mit erforderlicher Temperaturstabilität bis ca. 250°C, vorzugsweise sogar bis 300°C oder noch darüber) eingesetzt zu werden.

Diese eigentliche funktionelle Reflexionsschicht aus Reflektorschicht und reflexionserhöhendem LI-HI Schichtsystem gilt es vor temperaturinduzierten Degradationsmechanismen wie Oxidation, Diffusion und Agglomeration sowie Korrosion zu schützen.

Dies gelingt durch das Einbringen verschiedener weiterer Schichten sowohl unterhalb wie auch oberhalb der Reflektorschicht.

Die hohe Reflexion ist für LED-COB-Anwendungen besonders wichtig, da sich die Lichtausbeute bei einer Änderung der Totalreflexion um etwa den Faktor 4 gegenüber der Reflexion verbessert bzw. verschlechtert. Besonders wichtig ist bei diesem Anwendungsfall eine möglichst hohe Reflexion im Wellenlängenbereich zwischen 400 und 460nm, in dem üblicherweise (je nach Ausführungsform) die Emissionswellenlänge der verwendeten LEDs oder Laserdioden liegt. Vorzugsweise soll der Reflektor darüber hinaus gut gegen Korrosion geschützt sein, da Kleber, Polymer und Phosphor bei den hohen Betriebstemperaturen einen verstärkten korrosiven Angriff auf den Spiegel ausüben können.

Die Aufgabe wird durch den Vorschlag gelöst, das Schichtsystem auf einem üblichen Substrat anzuordnen und mit einer Reflektorschicht aus einem Metall zu versehen, wie aus dem Stand der Technik bekannt, beispielsweise aus Silber, Aluminium, Platin, Rhodium, Molybdän, Tantal, Wolfram oder einer Legierung unter Verwendung eines oder mehrerer dieser Metalle, und diese Reflektorschicht durch eine spezifische Schichtabfolge temperaturstabil zu machen und vorzugsweise gegen korrosive und mechanische Angriffe zu schützen.

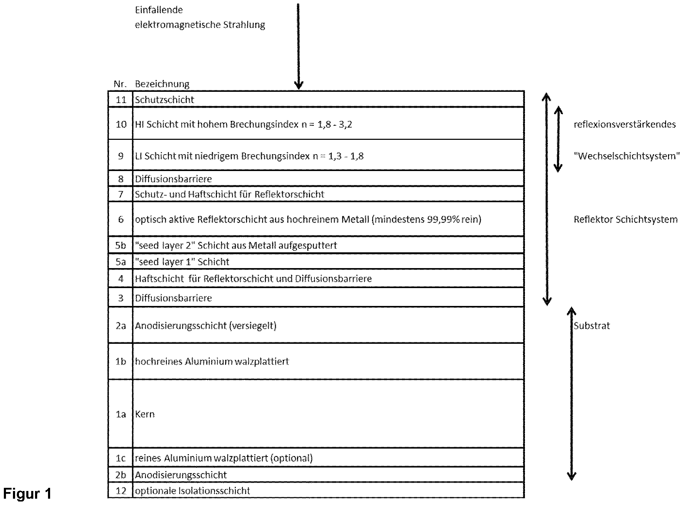

Das erfindungsgemäße Schichtsystem kann aufgrund seiner Eigenschaften als Oberflächenreflektor dienen; es weist die folgenden Komponenten auf, die nachstehend unter anderem unter Verweis auf Figur 1 näher erläutert werden:
ein beliebiges metallisches Substrat (1) mit einer ersten Oberflächen-Seite (A) und einer zweiten Oberflächen-Seite (B), das vorzugsweise aus den folgenden Komponenten aufgebaut ist:
   1a) einem Kern aus vorzugsweise Aluminium, einer Aluminiumlegierung, Kupfer, Molybdän, Titan, Tantal, Edelstahl, Stahl, Eisen, Weißblech oder einer Legierung unter Verwendung mindestens eines dieser Materialien oder aus mindestens zweien dieser Materialien, stärker bevorzugt aus Aluminium, beispielsweise 0,1 - 2 mm und vorzugsweise 0,3 - 1 mm dick,
   1b/c) wobei der Kern optional mit einer Walzplattierung versehen sein kann, die vorzugsweise aus hochreinem Aluminium (stärker bevorzugt mit einem Gehalt von mindestens 99,5%, noch stärker bevorzugt von mindestens 99,8% und ganz besonders bevorzugt von mindestens 99.9%) besteht, beispielsweise 0,02 bis 0,5 mm dick, wobei die Walzplattierung einseitig (Schicht 1b) auf der ersten Seite (A) oder beidseitig vorhanden sein kann, und
   2a/2b) einer Schicht aus Aluminiumoxid auf dem optional walzplattierten Kern, vorzugsweise hergestellt durch Anodisierung ("Anodisierungsschicht", "Eloxalschicht") der Aluminiumoberfläche, wenn das Substrat eine solche Oberfläche aufweist, die stärker bevorzugt durch eine Heißverdichtung z.B. mit heißem Wasser versiegelt wurde (beim Versiegelungsprozess werden Poren geschlossen, und die Schicht wird porenärmer und damit dichter und stabiler), beispielsweise 20 bis 2000 nm und vorzugsweise 400 bis 900 nm) dick, wobei die Aluminiumoxidschicht einseitig (Schicht 2a) auf der ersten Seite (A) oder beidseitig auf den Seiten (A) und (B) vorhanden sein kann,
wobei sich auf Seite (A) weiterhin oberhalb des Substrates, im Falle des Vorhandenseins einer Schicht 2a) oberhalb der Schicht 2a) und in der angegebenen Reihenfolge von innen nach außen die folgenden Schichten befinden:
4) eine Schicht, die insbesondere zur Verbesserung der Haftung für das Metall der Reflektorschicht und als Diffusionsbarriere vorgesehen ist, bestehend aus einem substöchiometrischen Titanoxid (TiOₓ) oder Zirkoniumoxid (ZrOₓ), wobei x jeweils < 2 ist, oder einem substöchiometrischen Titanoxinitrid (TiNₓO_{y}, oft auch als TiON bezeichnet) oder Zirkoniumoxinitrid (ZrNₓO_{y}), wobei jeweils x ≤ 1 und y < 2 ist und x+y einen solchen Wert besitzt, dass das Titanatom bzw. Zirkoniumatom formal nicht vollständig abgesättigt ist, oder einem Metall, ausgewählt unter Titan, Zirkonium, Molybdän, Platin und Chrom oder einer Legierung unter Verwendung eines dieser Metalle oder aus mindestens zweien dieser Metalle, vorzugsweise aus substöchiometrischem TiNₓO_{y}, vorzugsweise 5 bis 50 nm und stärker bevorzugt 10 bis 30 nm dick,
5a) eine Schicht ("seed" Schicht), die Kondensationskeime für ein bevorzugtes Aufwachsen der Reflektorschicht bereitstellt, die somit eine gute Haftung der Reflektorschicht gewährleistet und die insbesondere zur Vermeidung einer späteren Agglomeration des Metalls der Reflektorschicht und damit zur Verbesserung der Temperaturstabilität vorgesehen ist, bestehend aus einer Nickel-Legierung, vorzugsweise mit Chrom, Aluminium, Vanadium, Molybdän, Kobalt, Eisen, Titan und/oder Kupfer als Legierungspartner, wobei Nickel-Vanadium bevorzugt ist, oder aus einem Metall, ausgewählt unter Kupfer, Aluminium, Chrom, Molybdän, Wolfram, Tantal, Titan, Platin, Ruthenium, Rhodium und Legierungen unter Verwendung eines dieser Metalle oder aus mindestens zweien dieser Metalle, oder aus Eisen, Stahl oder Edelstahl, besonders bevorzugt aus einer NiV-Legierung, Cu oder Edelstahl, vorzugsweise 2-40 nm und stärker bevorzugt 5-30 nm dick, wobei die Wahl besonders bevorzugt auf Aluminium fallen soll, wenn dieses gesputtert und in Kombination mit einer Aluminium-Reflektorschicht eingesetzt wird, wie unten näher erläutert wird,
6) eine Reflektorschicht aus einem hochreinen Metall, das vorzugsweise einen Reinheitsgrad von mindestens 99,9% aufweist, stärker bevorzugt ausgewählt unter Silber, Aluminium, Gold, Platin, Rhodium, Molybdän und Chrom oder einer Legierung unter Verwendung eines dieser Metalle oder aus mindestens zweien dieser Metalle, besonders bevorzugt aus Silber oder Aluminium, noch stärker bevorzugt aus Silber, deren Dicke so gewählt wird, dass sie optisch dicht ist, d.h. keine oder im Wesentlichen keine (vorzugsweise weniger als 1%) elektromagnetischen Strahlung im Bereich von 300 - 2700nm und insbesondere des sichtbaren Lichts in darunter liegende Schichten passieren lässt, vorzugsweise mit einer Dicke von 50 bis 200 nm oder sogar bis 300 nm, häufig 90 bis 300 nm, stärker bevorzugt von 80 bis 180 nm oder von 100 bis 200 nm,
7) eine Schicht, die insbesondere der Agglomeration des Metalls der Reflektorschicht entgegenwirken und auch die Haftung der über der Reflektorschicht angeordneten Schichten verbessern soll. Diese wird vorzugsweise ausgewählt unter einem substöchiometrischen Oxid des Titans, Zirkoniums, Hafniums, Vanadiums, Tantals, Niobs oder des Chroms oder einem Mischoxid zweier oder mehrerer dieser Metalle, oder unter Metallen, ausgewählt unter Chrom, Titan, Zirkonium, Hafnium, Vanadium, Niob, Tantal, Wolfram, Molybdän, Rhodium und Platin und Legierungen unter Verwendung eines dieser Metalle oder aus mindestens zweien dieser Metalle, und die besonders bevorzugt aus substöchiometrischem Chromoxid oder substöchiometrischem Titanoxid gebildet wird, vorzugsweise etwa 2 bis 20 nm und stärker bevorzugt etwa 2 bis 10 nm dick,
9) eine Schicht mit niedrigerem Brechungsindex (LI-Schicht) im Verhältnis zur sich direkt anschließenden Schicht 10) ("HI-Schicht"), häufig mit einem Brechungsindex n = 1,3 bis 1,8, ausgewählt unter den dem Fachmann hierfür bekannten Materialien wie Metalloxiden, -fluoriden, -nitriden, -oxinitriden und -carbooxinitriden wie SiOₓ, Al₂O₃, MgF₂, AlF₃, CeF₃, YF₃, BaF₂ LaF₃, SiAlOₓ (SiLa), TiAlOₓ und Borosilikatglas, worin der Index x in den Oxiden so gewählt werden kann, dass entweder eine stöchiometrische Verbindung vorliegt oder die Kationen der Oxide formal nicht vollständig abgesättigt sind (d.h. eine substöchiometrische Verbindung vorliegt), insbesondere aus SiOₓ oder Al₂O₃ in einer Dicke von in der Regel 10 bis 200 nm, vorzugsweise 40 bis 100 nm, und
10) eine sich direkt an Schicht 9) anschließende Schicht (HI-Schicht) mit einem höheren Brechungsindex im Verhältnis zur Schicht 9) ("LI-Schicht"), häufig mit einem Brechungsindex n = 1,8 bis 3,2, ausgewählt unter den dem Fachmann hierfür bekannten Materialien wie Metalloxiden, -fluoriden, -nitriden, oxinitriden, -carbooxynitriden wie TiOₓ, TiAlO_{X}, ZrOₓ, HfOₓ, La₂O₃, Y₂O₃, Bi₂O₃, ZnO, SnO₂, Nb₂O₅, Y₂O₃, Si₃N₄, worin der Index x so gewählt werden kann, dass entweder eine stöchiometrische Verbindung vorliegt oder die Kationen der Oxide formal nicht vollständig abgesättigt sind, insbesondere aus TiOₓ oder ZrOₓ in einer Dicke von in der Regel 10 bis 200 nm, vorzugsweise 40 bis 100 nm.

Optional enthält das Schichtsystem weitere Schichten. So können weiterhin eine oder mehrere der nachfolgenden Schichten vorhanden sein:
3) zwischen der Schicht 2a) und der Schicht 4) eine weitere Schicht, die insbesondere als Diffusionsbarriere sowohl für den Durchtritt von Metallatomen des Substrats, , als auch von Atomen der Reflexionsschicht vorgesehen ist, vorzugsweise ausgewählt unter Nitriden und Oxinitriden, insbesondere des Chroms, des Titans, des Titan-Aluminiums und des Aluminiums, sowie ZAO (Zinkoxid-Aluminiumoxid), die besonders bevorzugt aus CrN besteht, vorzugsweise in einer Dicke von 5 bis 50 nm,
5b) direkt unterhalb der Reflexionsschicht 6) eine vorzugsweise nicht optisch dichte Schicht, die besonders bevorzugt auf den durch die Schicht 5a) bereitgestellten Kondensationskeimen aufwächst und einem besonders dichten Aufwachsen des Metalls für die Reflexionsschicht dienen soll ("seed layer 2") und vorzugsweise aus demselben Metall besteht wie die Reflexionsschicht, wobei diese Schicht mit einem PVD-Verfahren, insbesondere durch Sputtern, aufgebracht wird, und insbesondere für die Abscheidung des Metalls für die Reflexionsschicht durch ein anderes Verfahren als Sputtern, beispielsweise durch Elektronenstrahlverdampfung, günstig ist, vorzugsweise in einer Dicke von 2 bis 100, stärker bevorzugt von 2 bis 90 nm und noch stärker bevorzugt von 5 bis 40 nm,
8) zwischen der Schicht 7) und der Schicht 9) eine Schicht, die insbesondere die Diffusion von Atomen der Reflexionsschicht nach außen und eine Diffusion von Sauerstoff in die Reflexionsschicht verhindern und die Korrosionsstabilität des Schichtverbundes verbessern soll, vorzugsweise aus einem Material, das ausgewählt ist unter stöchiometrischem und substöchiometrischem ZnAlOₓ (ZAO), ZnO, TiOₓ, TiAlₙOₓN_{y}, TiOₓN_{y}, ZrOₓ, ZrAlₙOₓN_{y}, ZrOₓN_{y}, Si₃N₄, Al₂O₃ und AlOₓN_{y} besonders bevorzugt aus TiOₓ, ZAO oder Al₂O₃, wobei der Index x und die Summe x+y einen solchen Wert besitzen, dass entweder eine stöchiometrische Verbindung vorliegt oder das oder die metallischen Kationen formal nicht vollständig abgesättigt ist/sind (d.h. eine substöchiometrische Verbindung vorliegt) und n einen Wert von >1 bis 2 oder noch darüber annehmen kann, in einer Dicke von vorzugsweise 2 bis 30 nm und stärker bevorzugt von 10 bis 20 nm, wobei die stöchiometrischen Verbindungen gegenüber den substöchiometrischen bevorzugt sind, und
11) eine nach außen hin abschließende Schutzschicht, insbesondere aus einem Fluorid, Oxid, Oxinitrid oder Oxicarbonitrid, vorzugsweise aus LaF₃, ZrOₓ, SiOₓ, SiOₓN_{y}C_{z}, SnO₂, In₂O₃, SnInOₓ, InZnOₓ (ITO), ZnAlOₓ (ZAO) oder DLC (mit DLC werden "diamond like carbon"-Kohlenstoff-Schichten bezeichnet, die einen hohen Anteil an sp³-Bindungen aufweisen), wobei der Index x sowie die Summe x+y+z einen solchen Wert besitzen, dass entweder eine stöchiometrische Verbindung vorliegt oder das oder die metallischen Kationen formal nicht vollständig abgesättigt ist/sind (d.h. eine substöchiometrische Verbindung vorliegt). Diese Schicht kann auch so ausgestaltet sein, dass sie als Haftvermittlungsschicht für ein Klebsystem verwendet wird, mit der Komponenten wie z.B. LED-Dioden oder ein PCB auf die Reflektorschicht aufgeklebt werden. Im Falle von Solarspiegeln kann diese Schicht auch so ausgestaltet sein, das sie als Haftvermittlungsschicht für eine zusätzliche Sol-Gel oder Lackbeschichtung dient. Die Schutzschicht 11) kann auch ein Lack (besonders bevorzugt ein Fluoropolymer) oder eine Sol-Gel-Schicht (mit einem dreidimensionalen oxidischen, insbesondere silikatischen Netzwerk) sein. Dies ist besonders vorteilhaft, wenn der Oberflächenspiegel als Solarreflektor oder als MC-COB verwendet werden soll wobei die LEDs in FLIP-CHIP-Technologie montiert werden sollen.

Rückseitig (auf der Seite B) wird im Falle der Verwendung des Oberflächenspiegels als z.B. MC-COB für LEDs vorzugsweise eine elektrisch isolierende Schicht 12) aufgebracht, beispielsweise aus einem Lack oder einer aufgeklebten isolierenden Folie. Das Aufbringen eines elektrisch isolierenden Lacks ist dabei bevorzugt. Die Durchschlagsfestigkeit sollte dabei bevorzugt 2000 V und besonders bevorzugt 4000 V betragen.

Das erfindungsgemäße Schichtsystem kann mittels industrieller Dünnfilmbeschichtungsverfahren wie z. B. PVD, CVD, PECVD auf metallische Substrate aufgebracht werden. Besonders kostengünstig kann dies geschehen, wenn das Substrat als Band vorliegt, so dass es in kontinuierlichen Prozessen sowohl vorbehandelt, wie auch anschließend mit dem Schichtsystem in einer sogenannten Vakuum-Bandbeschichtungsanlage beschichtet werden kann, die besonders bevorzugt als "air to air" Anlage ausgestaltet ist, um mehrere Bänder ohne Produktionsunterbrechung hintereinander beschichten zu können.

Die Schichten 3), 4), 5a), 5b), 7) und 8), werden vorzugsweise durch ein PVD-Verfahren wie Sputtern aufgebracht. Auch die Reflexionsschicht 6) und das Wechselschichtsystem aus den Schichten 9) und 10) können durch Sputtern aufgebracht werden; bevorzugt ist es jedoch, sie durch Elektronenstrahl-Verdampfen abzuscheiden. Die Schutzschicht 11) kann eine Sol-Gel-Schicht (mit einem dreidimensionalen oxidischen, vorzugsweise silikatischen Netzwerk) oder ein beliebig aufgetragener Lack sein, sie kann stattdessen aber auch durch ein beliebiges anderes Verfahren, beispielsweise ein PVD-Verfahren wie Sputtern oder durch CVD bzw. PECVD (plasma enhanced chemical vapor deposition) aufgebracht werden.

Die Schichten 4), 5a), 6), 7), 9) und 10), gegebenenfalls in Kombination mit den Schichten 3) und/oder 5b) und/oder 8) und/oder 11), sind als optisch aktives Schichtsystem zu betrachten. Dabei fungierten die Schichten 9) und 10) in bekannter Weise als reflexionsverstärkendes "Wechselschichtsystem". Diese beiden Schichten können auch mehrfach eingesetzt werden, wobei immer eine HI Schicht auf eine LI Schicht folgt. In bevorzugter Weise wird das reflexionsverstärkende Wechselschichtsystem so ausgebildet und optimiert, dass je nach Einsatzgebiet die Reflexion im Fall von LEDs oder Lasern besonders hoch bei deren Emissionswellenlänge ist oder im Fall von Solarspiegeln eine besonders hohe solare Reflexion erzielt wird. Dies gelingt mit Hilfe optischer Berechnungen, die dem Fachmann bekannt sind.

Die unter der Reflexionsschicht liegenden Schichten können unter dem Aspekt ausgewählt werden, dass sie nicht hochtransparent sein müssen. Anders die Schichten oberhalb der Reflexionsschicht: Diese sollten möglichst hochtransparent sein. Unter diesem Aspekt ist es bevorzugt, für die Schicht 7) eine oxidische Schicht auszuwählen, die stärker bevorzugt substöchiometrisch ist, da eine substöchiometrische Schicht neben einer guten Transparenz auch eine gute Haftung der darüber liegenden Schichten gewährleistet.

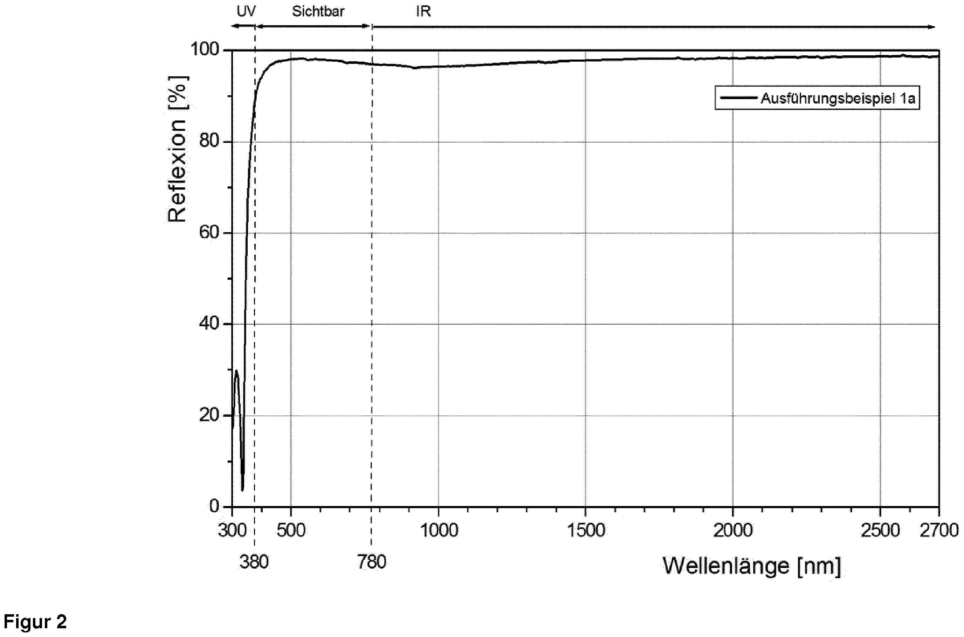

Ein Schichtsystem aus den Schichten 4), 5a), 5b), 6), 7), 9) und 10), die jeweils aus den als bevorzugt genannten Materialien bestanden, wie auch ein solches Schichtsystem, das zusätzlich Schichten 3) und 8) aufwies, zeigte eine Totalreflexion von 98%, wobei bei Wellenlängen ab 470 nm und höher die Reflexion bei steigenden Wellenlängen fast unverändert und völlig stetig verlief (siehe Figur 2).

Die Temperaturstabilität wird durch die Kombination der Schichten 4) und 5a), vorzugsweise in Kombination mit Schicht 5b), verbessert, indem Atome aus dem Substrat, beispielsweise Restchemikalien aus dem Anodisierungsprozess, wenn anodisiertes Aluminium als Substrat dient, nicht durch die Diffusionsbarriere der Schichten 4) und gegebenenfalls 3) hindurchdringen können. Eine solche Wanderung hätte eine Verunreinigung der hochreinen metallischen Reflektorschicht zur Folge, was mit einer rapiden Verschlechterung der Reflexionseigenschaften einhergehen würde. Durch die erfindungsgemäße Schichtkombination wird ferner eine Diffusion von Metallatomen aus der Reflektorschicht in das Substrat verhindert, was dazu führen würde, dass die Reflektorschicht nicht mehr optisch dicht ist. Letzteres würde ebenfalls mit einer rapiden Verschlechterung der Reflexionseigenschaften einhergehen.

Gemäß einer vorteilhaften Ausgestaltung des erfindungsgemäßen Oberflächenreflektors wird die Schichtfolge, die mit Schicht 4) bzw. 3) beginnt, auf ein walzplattiertes Aluminiumsubstrat aufgebracht, wobei die Walzplattierung aus hochreinem Aluminium mit einem Aluminiumgehalt von mindestens 99,5% oder noch stärker bevorzugt von mindestens 99,8 oder sogar 99,9% besteht, das elektrochemisch geglänzt, anschließend anodisiert und durch Heißverdichten im Wasserbad versiegelt wird.

Dieses Substrat bietet den Vorteil, dass sich die mechanischen Eigenschaften durch die Legierung des Aluminiumkerns bestimmen lassen, aber die Oberfläche trotzdem aus Aluminium mit geringen Verunreinigungen besteht. So ist es z. B. bei Solarspiegeln wichtig, dass der Spiegel sehr steif ist, so dass sich der Fokus des Spiegels auch bei Windlast nicht wesentlich verändert. Auch z. B. bei LED-Chips wird ein besonders steifes Substrat verlangt, um diese möglichst schlüssig auf einen Kühlkörper fügen zu können. Hochreines Aluminium ist dagegen sehr weich und erfüllt meist nicht die geforderten mechanischen Eigenschaften.

Auf der anderen Seite bietet hochreines Aluminium den Vorteil, dass es beim elektrochemischen Glänzen zu keiner Lochfraßkorrosion an Verunreinigungen kommt, so dass eine äußerst glatte Oberfläche mit geringem diffusem Reflexionsanteil erzeugt werden kann, was für die vorgesehenen Einsatzzwecke wichtig ist.

In einer bevorzugten Ausführungsform wird die Oberfläche dieses Bandsubstrates in einem kontinuierlichen nasschemischen Prozess behandelt, wobei das Substrat verschiedene Bäder durchläuft: Zunächst durchläuft das Bandsubstrat ein Reinigungsbad, in dem Oberflächenverunreinigungen vom Walzprozess entfernt werden. Anschließend durchläuft das Band ein Bad, in dem es elektrochemisch geglänzt (poliert) wird. Danach durchläuft es ein Bad, in dem durch anodische Oxidation eine Aluminiumoxidschicht auf der Oberfläche gebildet wird.

In einem anschließenden Wasserbad werden die Poren der Aluminiumoxidschicht durch Heißverdichtung verschlossen, so dass eine glatte, stabile Oberfläche entsteht, die mittels Vakuumverfahren beschichtbar ist. Derartige Schichten werden als ELOXAL oder ANOX-Schichten bezeichnet.

Das erfindungsgemäße Schichtsystem wird bevorzugt im kontinuierlichen Vakuum-Bandbeschichtungsprozess (Air- to Air Prozess) aufgebracht.

Besonders bevorzugt ist es, das Substrat vor dem Aufbringen der ersten Schicht 4) bzw. 3) durch einen Plasmareinigungsschritt vorzubehandeln, um die Wasserhaut, die sich auf jeder technischen Oberfläche an Luft bildet, und sonstige Verunreinigungen auf der Substratoberfläche zu entfernen. Besonders bevorzugt geschieht das durch eine sogenannte Glimmentladung mit Argon, einem Argon-Wasserstoff oder Argon-Sauerstoffgemisch. Damit wird erreicht, dass sich die Schicht 4) fest mit der Substratoberfläche verbinden kann, so dass eine hinreichende Haftung des Schichtsystems gegeben ist.

Zum Abscheiden des Schichtsystems können sowohl PVD, CVD wie auch PECVD Verfahren eingesetzt werden. Besonders bevorzugt werden dabei Abscheidungsverfahren wie Sputtern, thermisches Verdampfen oder Elektronenstrahlverdampfung (sowohl reaktiv wie auch nicht reaktiv) eingesetzt.

Schicht 3) wird bevorzugt reaktiv gesputtert, um einen gute Haftung zum Substrat und eine möglichst dichte Schicht zu erhalten, die damit ihre Funktion als Diffusionsbarriere besonders gut erfüllt.

Besonders bevorzugt wird die Haft- und Barriereschicht 4) auf das Substrat mittels Sputtern aufgebracht. Im Falle von TiOₓ oder TiOₓN_{y} wird die Schicht mittels reaktiven Sputterns durch Zugabe von Sauerstoff und oder Stickstoff aufgebracht. Bevorzugt wird dabei ein Titantarget und besonders bevorzugt ein TiOₓ Target verwendet.

Durch Temperaturtests konnte gezeigt werden, dass TiOₓ eine bevorzugte und TiOₓN_{y} eine besonders wirksame und damit bevorzugte Diffusionsbarriere auf anodisiertem Aluminiumsubstrat bildet.

Metallische Schichten sind besonders für Substrate bevorzugt, die eine metallische Oberfläche aufweisen.

Für die Schicht 5a) (seed layer 1) wird bevorzugt ein Material ausgewählt, dass in der elektrochemischen Spannungsreihe einen möglichst geringen Unterschied zum Standardelektrodenpotential des Materials aufweist, aus dem die Reflektorschicht ausgebildet ist. Dies ist für eine gute Korrosionsstabilität des Oberflächenspiegels wichtig. Besteht die Reflektorschicht beispielsweise aus Aluminium, kommen unter diesem Aspekt vor allem Titan, Chrom oder Nickel bzw. eine Nickellegierung für die Schicht 5a) in Betracht. Besteht die Reflektorschicht aus Chrom, können es beispielsweise Aluminium, Titan oder Molybdän sein, und besteht sie aus Kupfer, können Eisen, Molybdän oder Silber gewählt werden. Für eine Reflektorschicht aus Molybdän kann Nickel oder eine Nickellegierung, Chrom oder Eisen als Material für Schicht 5a) gewählt werden. Besteht sie aus Silber, wird man vor allem auf Kupfer, NiV oder Platin für die Schicht 5a) zurückgreifen. Daneben ist es vorteilhaft, wenn das Material so ausgewählt wird, dass es eine Legierung mit dem Material der Reflektorschicht bilden kann, so dass es im Interface zwischen Schicht 5a) und der Reflektorschicht 6) zu einer Durchdringung der Atome der beiden Schichten kommen kann. Dies ist wichtig, um eine gute Schichthaftung zu gewährleisten und später unter Temperatureinwirkung eine Agglomeration der Reflektorschicht zu vermeiden.

Besonders bevorzugt wird eine Nickellegierung verwendet, da sich diese Legierungen durch gute Oxidationsbeständigkeit unter Temperatureinwirkung und hervorragende Korrosionsbeständigkeit auszeichnen. Insbesondere ist es dabei günstig, solche Ni-Legierungen zu verwenden, die nicht ferromagnetisch sind, um hohe Abscheideraten beim Magnetronsputtern zu erreichen. Reines Nickel ist ferromagnetisch und stört die Magnetfelder der Magnetronsputtereinheiten, so dass nur sehr geringe Sputterraten erzielt werden können und der Sputterprozess unwirtschaftlich wird. Durch gezieltes Legieren kann man den Ferromagnetismus des Nickels unterdrücken. Z. B. sind folgende Nickellegierungen nicht ferromagnetisch und eignen sich somit bevorzugt zum Magnetronsputtern: NiCr 80:20%, NiV 93:7%, NiAl 90:10% (jeweils in Gewichtsprozent). Besonders bevorzugt wird NiV verwendet.

Durch Temperaturtests wurde gefunden, dass NiV auch hervorragend die Silbermigration verhindert, da NiV eine gute Diffusionsbarriere ist und Silber sehr gut auf NiV haftet, da Nickel gut mit Silber legiert. Auch die Korrosionsstabilität ist hervorragend.

Bevorzugt ist auch eine dünne Kupferschicht (4 - 10nm) als seed layer für eine Reflektorschicht 6) aus Silber geeignet, da sich Kupfer gut mit Silber legiert und der Unterschied zum Standardelektrodenpotential des Silbers besonders gering ist. Dicke Kupferschichten >10nm sind nicht geeignet, da das Kupfer unter Temperatureinwirkung in das Silber diffundiert und damit die Reflexion der Silberschicht herabsetzt.

Als Reflektorschicht 6) wird bevorzugt eine hochreine Aluminiumschicht und besonders bevorzugt eine hochreine Silberschicht verwendet, da diese Materialien schon eine besonders hohe intrinsische Reflexion im beanspruchten Wellenlängenbereich (Aluminium TR = 90%; Silber TR = 95%) besitzen.

Bevorzugt werden diese Materialien mittels Elektronenstrahlverdampfung abgeschieden, da dieses Verfahren hohe Abscheidungsraten gewährleistet, die den Prozess besonders wirtschaftlich machen, und zum anderen das Material bei einem gegenüber dem Sputtern wesentlich geringeren Druck (1E-6 bis 1E-4mbar, während der Druck beim Sputtern bei (1E-3 bis 6E-3 mbar liegt) abgeschieden werden kann, sodass die Schicht durch wesentlich geringerer Restgasmengen verunreinigt wird.

Aufgedampfte Schichten besitzen allerdings den Nachteil, dass die Teilchen mit nur geringen kinetischen Energien auf dem Substrat auftreffen (kleiner 10eV), so dass diese Schichten meist schlecht haften. Um diesen Nachteil auszugleichen, wird besonders bevorzugt ein "seed layer 2" (Schicht 5b) aus einem Metall - bevorzugt demselben Metall, aus dem die Reflektorschicht 6) besteht - zunächst auf die Schicht 5a) aufgesputtert. Beim Sputtern besitzen die Teilchen eine wesentlich höhere kinetische Energie (50 - 500eV), so dass sie wesentlich besser auf den durch den "seed layer 1" (Schicht 5a) bereitgestellten Kondensationskeimen haften. Auf dieser aufgesputterten Schicht wächst dann das aufgedampfte Material wesentlich besser auf.

In einem spezifischen Fall, in welchem die Reflektorschicht 6) aus Aluminium besteht, kann als "seed layer 1" gesputtertes Aluminium eingesetzt werden. Auf diesem haftet die aufgedampfte Aluminium-Reflektorschicht 6) besonders gut, so dass auf eine zweite "seed layer" Schicht verzichtet werden kann.

Wenn die Reflektorschicht 6) dagegen vollständig durch Sputtern abgeschieden werden soll, ist die Schicht 5b) verzichtbar.

Auch die Schicht 7) wird bevorzugt mittels Sputtern abgeschieden, da die Dicke dieser Schicht sehr präzise eingehalten werden muss, um die hohe Reflexion der Reflektorschicht nicht signifikant zu reduzieren. Dieser Anforderung lässt sich besonders gut durch Sputtern gerecht werden, da die Abscheidungsrate hier sehr präzise über die verwendete elektrische Leistung geregelt werden kann.

Soll ein metallisches Material für die Schicht 7) verwendet werden, ist die exakte Kontrolle der Schichtdicke besonders wichtig, da schon wenige nm ausreichen, um die Reflexion der Reflektorschicht signifikant zu reduzieren. Daher ist unter den oben genannten Materialien die Verwendung eines substöchiometrischen Oxids oder Mischoxids bevorzugt. Der Vorteil liegt darin, dass durch die Oxidation die Metalle teilweise transparent werden, so dass die Reflexion der Reflektorschicht auch bei größeren Schichtdicken weniger reduziert wird. Dagegen würde der Einsatz stöchiometrischer Oxide die Funktion der Schicht 7 als Haftschicht beinträchtigen, da sämtliche metallischen Verbindungen abgesättigt wären, so dass die Schicht auf der Reflektorschicht schlecht haften würde und somit die Funktion zur Verhinderung der Agglomeration und zur Haftvermittlung zu den darüber liegenden Schichten beeinträchtig wäre.

Zur Abscheidung dieser substöchiometrischen Schichten wird bevorzugt reaktive Sputtertechnik unter Monitoring des Sauerstoffgehalts in der Sputterkammer verwendet. Um den Grad der Oxidation genau steuern zu können, wird besonders bevorzugt ein Plasmamonitor oder eine Lambdasonde zur Regelung des Sauerstoffflusses verwendet, so dass sich der Sauerstoffgehalt der Schicht genau einstellen lässt. Daneben ist die exakte Dosierung des reaktiv zugeführten Sauerstoffes wichtig, weil es bei einer Überdosierung zu einer Oxidation der darunterliegenden metallischen Reflektorschicht kommen kann, was zu einer Reduktion der Reflexion dieser führen könnte.

Die Schicht 8) dient als Diffusionsbarriere. Im Gegensatz zu den Diffusionsbarriereschichten, die unterhalb der Reflektorschicht angebracht sind, muss diese hochtransparent sein. Daher werden vorzugsweise dielektrische Materialien eingesetzt. Diese müssen hinreichend dicht abgeschieden werden, um Ihre Funktion als Diffusionsbarriere erfüllen zu können. Daher werden diese Schichten bevorzugt reaktiv mittels Mittelfrequenzsputtern oder reaktivem gepulstem Gleichstromsputtern abgeschieden. Diese Verfahren eignen sich besonders gut zur Abscheidung dichter dielektrischer Materialen. Besonders bevorzugt werden keramische Targets benutzt.

Da die Schichten 9) und 10) relativ dick sein müssen, um ihre optische Funktion als reflexerhöhender Schichtverbund erfüllen zu können, werden sie bevorzugt mittels Elektronenstrahlverdampfung abgeschieden, da dieses Verfahren eine hohe Abscheidungsrate und damit eine kostengünstige Abscheidung gewährleistet.

Abhängig von den verwendeten Materialien kann es aber auch vorteilhaft sein, beide Schichten 9) und 10) mittels eines anderen Verfahrens abzuscheiden. Es lassen sich gegebenenfalls aber auch unterschiedliche Verfahren zur Abscheidung der Schichten 9) und 10) miteinander kombinieren. So kann die Kombination einer mittels Elektronenstrahlverdampfung aufgebrachten Schicht 9) (z.B. einer SiOₓ-Schicht, da sich SiOₓ schwer sputtern lässt) mit einer gesputterten Schicht 10) vorteilhaft sein.

Schicht 11) wird bevorzugt gesputtert, um einen gute Haftung zur Schicht 10) und eine möglichst dichte Schicht zu erhalten, die damit ihre Funktion als Diffusionsbarriere besonders gut erfüllt. Falls diese Schicht zusätzlich vor Abrasion schützen soll, so ist Sputtern auch bevorzugt, da man mit diesem Verfahren besonders harte Schichten erzeugen kann. Die Schutzschicht 11) kann aber auch ein Lack (besonders bevorzugt ein Fluropolymer) oder eine Sol-Gel-Schicht (mit einem dreidimensionalen oxidischen Netzwerk, insbesondere einem silikatischen Netzwerk) sein.

Nachstehend soll die Erfindung anhand von spezifischen Ausführungsbeispielen näher erläutert werden.

### Ausführungsbeispiel 1

Oberflächenspiegel für MB - COB für LEDs auf Aluminiumsubstrat

Als Substrat wird walzplattiertes Aluminium mit einem Kern aus einer Aluminiumlegierung mit der Härte H18 oder H19 und einer einseitigen Walzplattierung mit 99,9% reinem Aluminium verwendet. Die Dicke der Plattierung beträgt etwa 10% der Dicke des Kerns. Dabei wird bevorzugt Aluminiumband mit einer Dicke zwischen 0,7 und 1,0 mm besonders bevorzugt 0,7 mm verwendet. Die Breite kann bis zu 1600mm betragen, besonders bevorzugt wird eine Breite von 1250mm verwendet.

Die Oberfläche dieses Bandsubstrates wird in einem kontinuierlichen nasschemischen Prozess behandelt, wobei das Substrat verschiedene Bäder durchläuft: Zunächst durchläuft das Bandsubstrat ein Reinigungsbad, in dem Oberflächenverunreinigungen vom Walzprozess entfernt werden. Anschließend durchläuft das Band ein Bad, in dem es elektrochemisch geglänzt (poliert) wird. Danach durchläuft es ein Bad, in dem durch anodische Oxidation eine Aluminiumoxidschicht (Schicht 2)) auf der Oberfläche gebildet wird. In einem anschließenden Wasserbad werden die Poren der Aluminiumoxidschicht durch Heißverdichtung verschlossen, so dass eine glatte, stabile Oberfläche entsteht, die mittels Vakuumverfahren beschichtbar ist.

### Erste Ausführungsvariante der Schicht 2)

In einer bevorzugten Ausführungsform wird eine Aluminiumoxidschicht 2) mit einer Dicke zwischen 400 und 900 nm aufgebracht. Diese Dicke bietet gegenüber der üblicherweise für Beleuchtungsanwendungen verwendeten Dicke zwischen 1000 und 2000 nm den Vorteil, dass sie die Oberfläche des Oberflächenreflektors ausreichend gegen mechanische Beschädigung schützt und daneben eine geringe Restmenge an Chemikalien und Wasser aus dem nasschemischen Prozess enthält, so dass es zu keinen Druckproblemen während der anschließenden Beschichtung mittels Vakuumverfahren kommt und auch später unter Temperatureinwirkung weniger Verunreinigungen aus der Aluminiumoxidschicht in das darüber angeordnete Schichtsystem diffundieren können.

### Zweite Ausführungsvariante 1b der Schicht 2)

In einer anderen bevorzugten Ausführungsform wird eine Aluminiumoxidschicht 2) mit einer Dicke von nur 20 - 80 nm aufgebracht. Diese Schichtdicke ist noch ausreichend, um einen guten Schutz der Aluminiumoberfläche und eine gute Beschichtbarkeit mittels Vakuumverfahren zu gewährleisten. Diese Ausführungsform bietet zwar keinen so hohen Schutz vor mechanischer Beschädigung, bietet aber den Vorteil, dass die Aluminiumoxidschicht eine entsprechend dem kleineren Volumen noch geringere Restmengen an Chemikalien und Wasser enthält, die unter Temperatureinwirkung in das darüber liegende Schichtsystem diffundieren und so das Reflexionsvermögen des Schichtsystems verringern könnten. TEM Untersuchungen haben außerdem gezeigt, dass es selbst bei sehr guten Diffusionsbarriereschichten, die zwischen dem Substrat und der Reflexionsschicht angeordnet sind, nach langer Einwirkung (größer 10.000 Stunden) von hohen Temperaturen (> 80°C) dazu kommen kann, dass es zu einer Diffusion von Atomen der Reflektorschicht in die Aluminiumoxidschicht kommen kann. Es wurde beobachtet, dass die Poren der Anodisierungsschicht mit der Zeit mit Atomen aus der Reflektorschicht gefüllt werden. Wenn schließlich alle Poren gefüllt sind, kommt dieser Prozess zum Stillstand. In dem Fall, dass die Reflektorschicht im Ausgangszustand mindestens doppelt so dick wie die Anodisierungsschicht ist, wurde beobachtet, dass die Dicke der verbleibenden Reflektorschicht ausreicht, um noch optisch dicht zu sein und somit keinen signifikanten Reflexionsverlust aufweist.

Anschließend wird das so vorbehandelte Substrat, mittels einer Air - to - Air PVD Bandbeschichtungsanlage beschichtet.

Nachdem das Band über Vakuumschleusen in das Vakuum eingelaufen ist, wird die Substratoberfläche mittels Plasmaverfahren gereinigt. Danach durchläuft das Band verschiedene Beschichtungsstationen, in denen die einzelnen Schichten des Schichtsystems mittels verschiedener oben beschriebenen PVD - Verfahren abgeschieden wird. Die Schichtdicken der einzelnen Schichten werden dabei durch Ellipsometrie gemessen und geregelt. Die optischen Eigenschaften des Gesamtschichtsystems am Ende des Beschichtungsprozesses werden durch Spektrometer vermessen.

Im Einzelnen wird folgendes Schichtsystem in der nachstehenden Reihenfolge abgeschieden.

### Beschichtungsstation 1

Schicht 4) besteht aus TiNₓO_{y} und wird mittels reaktiven Magnetronsputtern mit einer Schichtdicke von 3- 50 nm abgeschieden.

### Beschichtungsstation 2

Schicht 5a) (Seed layer 1) besteht aus NiV 93:7 Gewichtsprozent und wird mittels Magnetronsputtern mit einer Schichtdicke von 2 bis 40 nm abgeschieden.

### Beschichtungsstation 3

Schicht 5b) (Seed layer 2) besteht aus Silber und wird mittels Magnetronsputtern mit einer Schichtdicke von 2 - 20 nm abgeschieden.

### Beschichtungsstation 4

Schicht 6) besteht aus hochreinem Silber (99,99%) und wird mittels Elektronenstrahlverdampfen abgeschieden. Die Schichtdicke beträgt zwischen 80 und 180 nm.

### Beschichtungsstation 5

Die Schicht 7) besteht aus substöchiometrischem CrOₓ oder TiOx und wird mittels Sputtern abgeschieden. Die Schichtdicke beträgt zwischen 2 -10 nm

### Beschichtungsstation 6

Die Schicht 9) besteht aus SiOx und wird mittels Elektronenstrahlverdampfung abgeschieden. Die Schichtdicke beträgt 60 nm.

### Beschichtungsstation 7

Die Schicht 10) besteht aus TiOₓ und wird mittels Elektronenstahlverdampfung abgeschieden. Die Schichtdicke beträgt 50 nm.

### Weitere Ausführungsvarianten

In einer spezifischen Ausführungsvariante, die mit allen anderen Ausgestaltungen der Erfindung kombinierbar ist, wird noch eine Diffusionsbarriereschicht (8) aus Al₂O₃ oder TiOₓ zwischen Schicht (7) und (9) eingebracht. Damit kann die Temperaturstabilität des Schichtsystems noch erhöht werden. Insbesondere Günstig ist diese Variante in Kombination mit der ersten Ausführungsvariante der Schicht 2).

Konkrete Schichtsysteme des Ausführungsbeispiels 1 sind in den nachstehenden Tabellen aufgelistet, wobei dort teilweise besonders günstige Dickenbereiche angegeben sind:

| Nr. | **Ausführungsbeispiel 1a** | Material | Schichtdicke |
|---|---|---|---|
| 11 | Schutzschicht | | 0 |
| 10 | HI Schicht mit hohem Brechungsindex n = 1,8 - 3,2 | TiOx | 50 nm |
| 9 | LI Schicht mit niedrigem Brechungsindex n = 1,3 - 1,8 | SiOx | 60 nm |
| 8 | Diffusionsbarriere | | 0 |
| 7 | Agglomeration protection layer | CrOx | 2-10nm |
| 6 | optisch aktive Reflektorschicht aus hochreinem Metall | Ag | 90 - 200 nm |
| 5b | "seed layer 2" gesputterte Schicht aus Material der Reflektorschicht | Ag | 2-20nm |
| 5a | "seed layer 1" | NiV 93:7% | 2 - 40 nm |
| 4 | Haftschicht für Silber und Diffusionsbarriere | TiOxNy | 10 - 30 nm |
| 3 | Diffusionsbarriere | | |
| 2a | Anodisierungsschicht (versiegelt) | Al2O3 | 400 - 900 nm |
| 1b | hochreines Aluminium walzplattiert | Al 99,9% | 0,05 - 0,3 mm |
| 1a | Kern | Aluminiumlegierung | 0,7 - 1,0 mm |
| 1c | reines Aluminium walzplattiert (optional) | | |
| 2b | Anodisierungsschicht | Al2O3 | 400 - 900 nm |
| 12 | optionale Isolationsschicht | | |

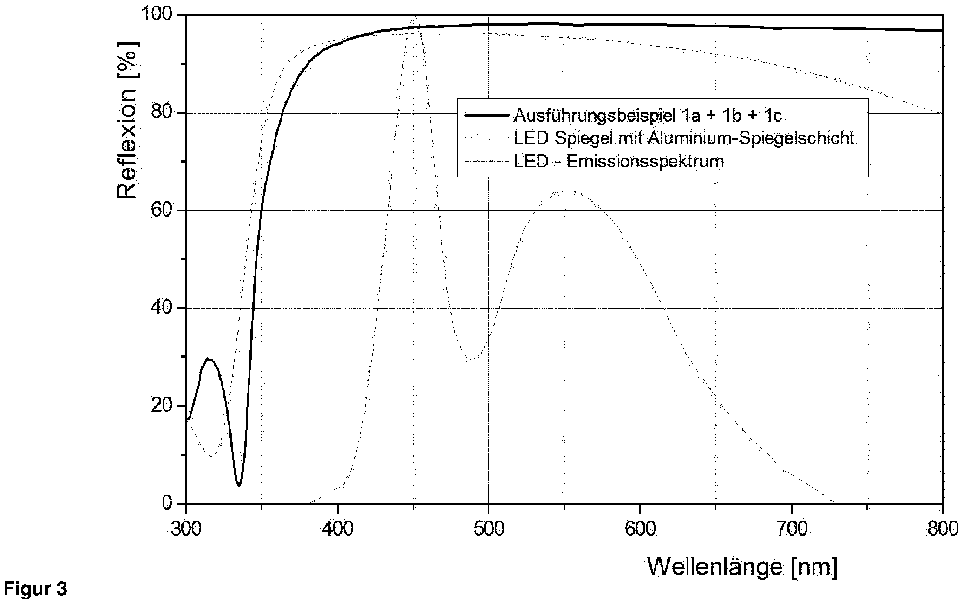

Dieses Schichtsystem besitzt eine Totalreflexion größer 98% (siehe Figur 3). Die Temperaturstabilität ist sehr gut. Bei einer Temperaturlagerung bei 150°C über 3000h nimmt die Totalreflexion maximal um 2% ab.

Auch die Korrosionsstabilität dieses Schichtsystems ist sehr gut. In einer 10% K₂S Lösung nahm die Reflexion nach 48h weniger als 2% ab, während ein Schichtsystem ohne NiV Schicht schon nach 1h vollkommen zerstört war. Auch in 10% Schwefelsäure nahm die Reflexion über einen Zeitraum von 100h weniger als 2% ab, während ein Schichtsystem ohne NiV-Schicht schon nach 24h eine Abnahme der Reflexion von mehr als 2% zeigte.

In einem Klimatest bei 85°C, 85%rH über 1000 Stunden nahm die Totalreflexion um weniger als 1% ab, währen beim Standardprodukt für die Beleuchtung die Totalreflexion um mehr als 4% abnahm.

### Ausführungsbeispiel 1a'

Alternativ zum Ausführungsbeispiel 1a kann für die Schicht 10 statt TiOx auch ZrOx verwendet werden. Damit erreicht man eine weitere Verbesserung der Korrosionsstabilität. Die Totalreflexion beträgt auch in diesem Fall einen Wert größer 98%.

| Nr. | **Ausführungsbeispiel 1a**' | Material | Schichtdicke |
|---|---|---|---|
| 11 | Schutzschicht | | 0 |
| 10 | HI Schicht mit hohem Brechungsindex n = 1,8 - 3,2 | ZrOx | 58 nm |
| 9 | LI Schicht mit niedrigem Brechungsindex n = 1,3 - 1,8 | SiOx | 60 nm |
| 8 | Diffusionsbarriere | | 0 |
| 7 | Agglomeration protection layer | CrOx | 2 - 10nm |
| 6 | optisch aktive Reflektorschicht aus hochreinem Metall | Ag | 90 - 200 nm |
| 5b | "seed layer 2" gesputterte Schicht aus Material der Reflektorschicht | Ag | 2 - 20nm |
| 5a | "seed layer 1" | NiV 93:7% | 2 - 40 nm |
| 4 | Haftschicht für Silber und Diffusionsbarriere | TiOxNy | 10 - 30 nm |
| 3 | Diffusionsbarriere | | |
| 2a | Anodisierungsschicht (versiegelt) | Al2O3 | 400 - 900 nm |
| 1b | hochreines Aluminium walzplattiert | Al 99,9% | 0,05 - 0,3 mm |
| 1a | Kern | Aluminiumlegierung | 0,7 - 1,0 mm |
| 1c | reines Aluminium walzplattiert (optional) | | |
| 2b | Anodisierungsschicht | Al2O3 | 400 - 900 nm |
| 12 | optionale Isolationsschicht | | |

### Ausführungsbeispiel 1b

Das Schichtsystem eines alternativen Ausführungsbeispiels 1b ist in der nachstehenden Tabelle aufgelistet. Dieses Beispiel nutzt Al₂O₃ als zusätzliche Diffusionsbarriere (Schicht 8):

| Nr. | **Ausführungsbeispiel 1b** | Material | Schichtdicke |
|---|---|---|---|
| 11 | Schutzschicht | | 0 |
| 10 | HI Schicht mit hohem Brechungsindex n = 1,8 - 3,2 | TiOx | 50 nm |
| 9 | LI Schicht mit niedrigem Brechungsindex n = 1,3 - 1,8 | SiOx | 40 - 55 nm |
| 8 | Diffusionsbarriere | Al2O3 | 5 - 25 nm |
| 7 | Agglomeration protection layer | CrOx | 2-10nm |
| 6 | optisch aktive Reflektorschicht aus hochreinem Metall | Ag | 90 - 200 nm |
| 5b | "seed layer 2" gesputterte Schicht aus Material der Reflektorschicht | Ag | 2-20nm |
| 5a | "seed layer 1" | NiV 93:7% | 2 - 40 nm |
| 4 | Haftschicht für Silber und Diffusionsbariere | TiOxNy | 10 - 30 nm |
| 3 | Diffusionsbarriere | | |
| 2a | Anodisierungsschicht (versiegelt) | Al2O3 | 400 - 900 nm |
| 1b | hochreines Aluminium walzplattiert | Al 99,9% | 0,05 - 0,3 mm |
| 1a | Kern | Aluminiumlegierung | 0,7 - 1,0 mm |
| 1c | reines Aluminium walzplattiert (optional) | | |
| 2b | Anodisierungsschicht | Al2O3 | 400 - 900 nm |
| 12 | optionale Isolationsschicht | | |

### Ausführungsbeispiel 1b'

Das Schichtsystem eines alternativen Ausführungsbeispiels zu Beispiel 1b ist in der nachstehenden Tabelle aufgelistet. Dieses Beispiel nutzt TiOx als Diffusionsbarriere (Schicht 8):

| Nr. | **Ausführungsbeispiel 1b'** | Material | Schichtdicke |
|---|---|---|---|
| 11 | Schutzschicht | | 0 |
| 10 | HI Schicht mit hohem Brechungsindex n = 1,8 - 3,2 | TiOx | 50 nm |
| 9 | LI Schicht mit niedrigem Brechungsindex n = 1,3 - 1,8 | SiOx | 40 -55 nm |
| 8 | Diffusionsbarriere | TiOx | 5 - 25 nm |
| 7 | Agglomeration protection layer | CrOx | 2 - 10nm |
| 6 | optisch aktive Reflektorschicht aus hochreinem Metall | Ag | 90 - 200 nm |
| 5b | "seed layer 2" gesputterte Schicht aus Material der Reflektorschicht | Ag | 2 - 20nm |
| 5a | "seed layer 1" | NiV 93:7% | 2 - 40 nm |
| 4 | Haftschicht für Silber und Diffusionsbariere | TiOxNy | 10 - 30 nm |
| 3 | Diffusionsbarriere | | |
| 2a | Anodisierungsschicht (versiegelt) | Al2O3 | 400 - 900 nm |
| 1b | hochreines Aluminium walzplattiert | Al 99,9% | 0,05 - 0,3 mm |
| 1a | Kern | Aluminiumlegierung | 0,7 - 1,0 mm |
| 1c | reines Aluminium walzplattiert (optional) | | |
| 2b | Anodisierungsschicht | Al2O3 | 400 - 900 nm |
| 12 | optionale Isolationsschicht | | |

Das Schichtsystem 1b bzw. 1b' besitzt eine Totalreflexion größer 98% (siehe Figur 3). Die Temperaturstabilität ist ebenfalls sehr gut. Bei einer Temperaturlagerung bei 150°C über 3000h nimmt die Totalreflexion maximal um 2% ab.

### Ausführungsbeispiel 1c

Das Schichtsystem eines weiteren Ausführungsbeispiels 1c ist in der nachstehenden Tabelle aufgelistet Hier wurde nur eine dünne Anodisierungsschicht ("flash anodised") von 40 -80nm aufgebracht:

| Nr. | **Ausführungsbeispiel 1c** | Material | Schichtdicke |
|---|---|---|---|
| 11 | Schutzschicht | | 0 |
| 10 | HI Schicht mit hohem Brechungsindex n = 1,8 - 3,2 | TiOx | 50 nm |
| 9 | LI Schicht mit niedrigem Brechungsindex n = 1,3 - 1,8 | SiOx | 60 nm |
| 8 | Diffusionsbarriere | | 0 |
| 7 | Agglomeration protection layer | CrOx | 2 - 10nm |
| 6 | optisch aktive Reflektorschicht aus hochreinem Metall | Ag | 90 - 200 nm |
| 5b | "seed layer 2" gesputterte Schicht aus Material der Reflektorschicht | Ag | 2 - 20nm |
| 5a | "seed layer 1" | NiV 93:7% | 2 - 40nm |
| 4 | Haftschicht für Silber und Diffusionsbarriere | TiOx oder TiOₓN_{y} | 10 - 30 nm |
| 3 | Diffusionsbarriere | | |
| 2a | Anodisierungsschicht (versiegelt) | Al2O3 | 40 - 80 nm |
| 1b | hochreines Aluminium walzplattiert | Al 99,9% | 0,05 - 0,3 mm |
| 1a | Kern | Aluminiumlegierung | 0,7 - 1,0 mm |
| 1c | reines Aluminium walzplattiert (optional) | | |
| 2b | Anodisierungsschicht | Al2O3 | 40 - 70 nm |
| 12 | optionale Isolationsschicht | | |

Bei der Ausführungsvariante 1c wurde eine bessere Temperaturstabilität (Bei einer Temperaturlagerung bei 150°C über 3000h nimmt die Totalreflexion maximal um 1% ab), aber eine etwas geringere Korrosionsstabilität beobachtet als im Ausführungsbeispiel 1a. Auch dieses Schichtsystem besitzt eine Totalreflexion größer 98% (siehe Figur 3).

### Ausführungsbeispiel 1d

Alternativ kann die Reflektorschicht auch zwischen einer Edelstahl- und einer TiOₓ Schicht eingebettet sein. Das Schichtsystem des Ausführungsbeispiels 1d ist in der nachstehenden Tabelle aufgelistet:

| Nr. | **Ausführungsbeispiel 1d** | Material | Schichtdicke |
|---|---|---|---|
| 11 | Schutzschicht | | 0 |
| 10 | HI Schicht mit hohem Brechungsindex n = 1,8 - 3,2 | TiOx | 50 nm |
| 9 | LI Schicht mit niedrigem Brechungsindex n = 1,3 - 1,8 | SiOx | 60 nm |
| 8 | Diffusionsbarriere | | 0 |
| 7 | Agglomeration protection layer | TiOx | 2 - 10nm |
| 6 | optisch aktive Reflektorschicht aus hochreinem Metall | Ag | 90 - 200 nm |
| 5b | "seed layer 2" gesputterte Schicht aus Material der Reflektorschicht | Ag | 2 - 20nm |
| 5a | "seed layer 1" | Edelstahl | 2 - 40 nm |
| 4 | Haftschicht für Silber und Diffusionsbarriere | TiOx oder TiOₓN_{y} | 10 - 30 nm |
| 3 | Diffusionsbarriere | | |
| 2a | Anodisierungsschicht (versiegelt) | Al2O3 | 400 - 900 nm |
| 1b | hochreines Aluminium walzplattiert | Al 99,9% | 0,05 - 0,3 mm |
| 1a | Kern | Aluminiumlegierung | 0,7 - 1,0 mm |
| 1c | reines Aluminium walzplattiert (optional) | | |
| 2b | Anodisierungsschicht | Al2O3 | 400 - 900 nm |
| 12 | optionale Isolationsschicht | | |

Dieses Schichtsystem besitzt eine Totalreflexion größer 98%.

### Ausführungsbeispiel 1e

Um die Haftung des Klebsystems für die LEDs auf der Oberfläche noch zu verbessern und den korrosiven Angriff der Klebstoffkomponenten auf das Schichtsystem zu verringern, hat es sich als vorteilhaft erwiesen, noch eine zusätzliche Deckschicht 11 auf das Schichtsystem aufzusputtern.

Besonders bevorzugt wird dazu SiOx, ZrOx oder ZAO verwendet, besonders bevorzugt ist SiOx.

Das Schichtsystem des Ausführungsbeispiels 1e ist in der nachstehenden Tabelle aufgelistet:

| Nr. | **Ausführungsbeispiel 1e** | Material | Schichtdicke |
|---|---|---|---|
| 11 | Schutzschicht | SiOx | 5- 10nm |
| 10 | HI Schicht mit hohem Brechungsindex n = 1,8 - 3,2 | TiOx | 45 nm |
| 9 | LI Schicht mit niedrigem Brechungsindex n = 1,3 - 1,8 | SiOx | 60 nm |
| 8 | Diffusionsbarriere | | 0 |
| 7 | Agglomeration protection layer | CrOx | 2 - 10nm |
| 6 | optisch aktive Reflektorschicht aus hochreinem Metall | Ag | 90 - 200 nm |
| 5b | "seed layer 2" gesputterte Schicht aus Material der Reflektorschicht | Ag | 2 - 20nm |
| 5a | "seed layer 1" | NiV 93:7% | 2 - 40 nm |
| 4 | Haftschicht für Silber und Diffusionsbarriere | TiOx oder TiOₓN_{y} | 10 - 30 nm |
| 3 | Diffusionsbarriere | | |
| 2a | Anodisierungsschicht (versiegelt) | Al2O3 | 400 - 900 nm |
| 1b | hochreines Aluminium walzplattiert | Al 99,9% | 0,05 - 0,3 mm |
| 1a | Kern | Aluminiumlegierung | 0,7 - 1,0 mm |
| 1c | reines Aluminium walzplattiert (optional) | | |
| 2b | Anodisierungsschicht | Al2O3 | 400 - 900 nm |
| 12 | optionale Isolationsschicht | | |

### Ausführungsbeispiel 2

Oberflächenspiegel für MB - COB auf Kupfersubstrat

Für LED-Chips mit einer sehr hohen Leistung wird ein Substrat mit einer sehr hohen Wärmeleitfähigkeit benötigt, um die entstehende Wärme effektiv abführen zu können. Hier ist es vorteilhaft, das Schichtsystem auf Kupfer abzuscheiden. Hierfür kann z. B Kupfer DHP oder DLP mit einer Wärmeleitfähigkeit von größer 340W/mK oder bevorzugt OF-Kupfer mit einer besonders hohen Wärmeleitfähigkeit (>390W/mK) und besonders bevorzugt OF-Kupfer, das mit Silber legiert ist (0,03%), welches eine bessere Warmfestigkeit aufweist, verwendet werden.

Das Kupfer in Bandform wird ebenfalls mittels PVD-Bandbeschichtungsanlage beschichtet. Da Kupferoberflächen vom Walzprozess noch leichte Ölreste auf der Oberfläche aufweisen können ist es hier nötig, dass sie nicht nur geglimmt, sondern zusätzlich noch Plasma-geätzt werden. Das Band durchläuft bei der Beschichtung ebenfalls die verschiedenen Beschichtungsstationen, wie im Fall eines Aluminium-Substrats. Die Schicht 4) besteht hier allerdings aus einer metallischen Schicht. Besonders bevorzugt wird Chrom verwendet. Somit ergibt sich als besonders bevorzugtes Schichtsystem für Kupfersubstrate das folgende:

| Nr. | **Ausführungsbeispiel 2** | Material | Schichtdicke |
|---|---|---|---|
| 11 | Schutzschicht | | 0 |
| 10 | HI Schicht mit hohem Brechungsindex n = 1,8 - 3,2 | TiOx | 50 nm |
| 9 | LI Schicht mit niedrigem Brechungsindex n = 1,3 - 1,8 | SiOx | 60 nm |
| 8 | Diffusionsbarriere | | 0 |
| 7 | Agglomeration protection layer | CrOx | 2 - 10nm |
| 6 | optisch aktive Reflektorschicht aus hochreinem Metall | Ag | 90 - 200 nm |
| 5b | "seed layer 2" gesputterte Schicht aus Material der Reflektorschicht | Ag | 2 - 20nm |
| 5a | "seed layer 1" | NiV 93:7% | 2 - 40 nm |
| 4 | Haftschicht für Silber und Diffusionsbarriere | Cr | 10 - 30 nm |
| 3 | Diffusionsbarriere | | |
| 2a | Anodisierungsschicht (versiegelt) | | |
| 1b | hochreines Aluminium walzplattiert | | |
| 1a | Kern | OF Kupfer 0,03% Ag | 0,2 - 0,4 mm |
| 1c | reines Aluminium walzplattiert (optional) | | |
| 2b | Anodisierungsschicht | | |
| 12 | optionale Isolationsschicht | | |

| | | | |
|---|---|---|---|
| Dieses Schichtsystem besitzt eine Totalreflexion größer 97%. | | | |

### Ausführungsbeispiel 3a

Solarreflektor mit gesputterter Schutzschicht

Bei Oberflächenspiegeln, die als Solarreflektoren genutzt werden, ist es wichtig, dass der Anteil der gerichteten Reflexion besonders hoch ist, um die Solarstrahlung möglichst gut fokussieren zu können, d. h. der diffuse Reflexionsanteil sollte möglichst gering sein. Hier wird bevorzugt walzplattiertes Aluminium mit einer besonders glatten Oberfläche eingesetzt (Ra < 0,1µm).

Das Schichtsystem weist noch eine Schutzschicht 11 besonders bevorzugt aus reaktiv aufgesputtertem ZrOx auf, um das System gegen Abrasion und Korrosion zu schützen.

Das Schichtsystem des Ausführungsbeispiels 3a ist in der nachstehenden Tabelle aufgelistet:

| Nr. | **Ausführungsbeispiel 3a** | Material | Schichtdicke |
|---|---|---|---|
| 11 | Schutzschicht | ZrOx | 5 - 20 nm |
| 10 | HI Schicht mit hohem Brechungsindex n = 1,8 - 3,2 | TiOx | 30 - 45 nm |
| 9 | LI Schicht mit niedrigem Brechungsindex n = 1,3 - 1,8 | SiOx | 60nm |
| 8 | Diffusionsbarriere | | 0 |
| 7 | Agglomeration protection layer | CrOx | 2 - 10nm |
| 6 | optisch aktive Reflektorschicht aus hochreinem Metall | Ag | 90 - 200 nm |
| 5b | "seed layer 2" gesputterte Schicht aus Material der Reflektorschicht | Ag | 2 - 20nm |
| 5a | "seed layer 1" | NiV 93:7% | 2 - 40 nm |
| 4 | Haftschicht für Silber und Diffusionsbarriere | TiOx oder TiOxNy | 10 - 30 nm |
| 3 | Diffusionsbarriere | | |
| 2a | Anodisierungsschicht (versiegelt) | Al2O3 | 700 - 1200 nm |
| 1b | hochreines Aluminium walzplattiert | Al 99,9% | 0,05 - 0,3 mm |
| 1a | Kern | Aluminiumlegierung | 0,3 - 0,5 mm |
| 1c | reines Aluminium walzplattiert (optional) | | |
| 2b | Anodisierungsschicht | Al2O3 | 700 - 1200 nm |
| 12 | optionale Isolationsschicht | | |

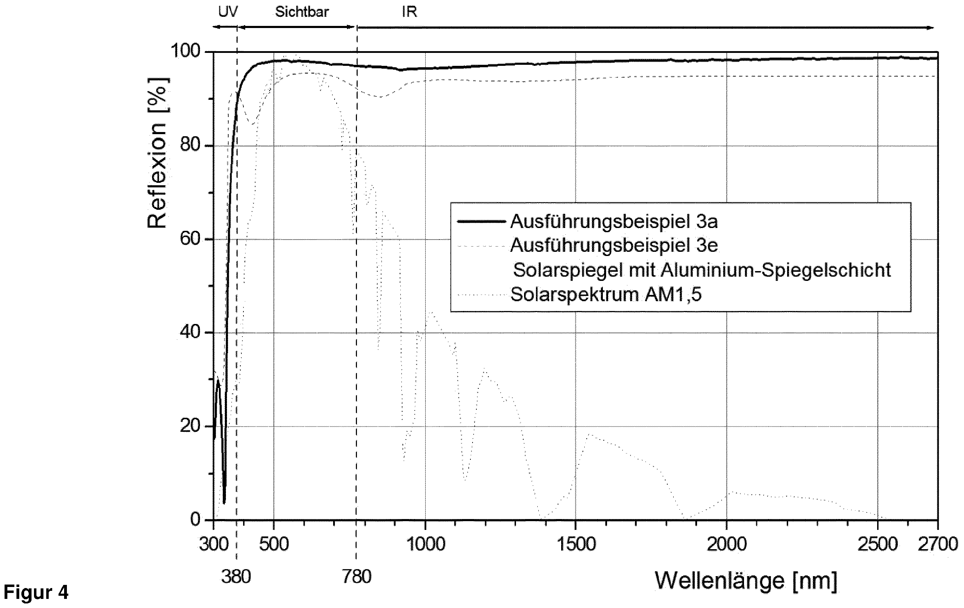

Dieses Schichtsystem besitzt eine solare Reflexion von über 95% nach ASTM 891-87 und damit eine signifikant höhere Reflexion als ein Solarspiegel mit einer Reflektorschicht aus Aluminium, der eine solare Reflexion von nur etwa 92% aufweist (siehe Figur 4). Durch einen diffusen Reflexionsanteil von unter 6% nach DIN 5036-3 (1° Apertur) eignet sich dieser Oberflächenspiegel besonders gut als Solarreflektor. Die Temperaturstabilität ist sehr gut. Bei einer Temperaturlagerung bei 250°C über 1000h geht die Reflexion maximal um 2% zurück.

### Ausführungsbeispiel 3b

### Solarreflektor mit Sol-Gel Schutzschicht

Das Schichtsystem weist noch eine Schutzschicht 11, besonders bevorzugt aus mittels Sol-Gel abgeschiedenem SiOₓ auf, um das System besonders gut gegen Abrasion und Korrosion zu schützen.

Das Schichtsystem des Ausführungsbeispiels 3b ist in der nachstehenden Tabelle aufgelistet:

| Nr. | **Ausführungsbeispiel 3b** | Material | Schichtdicke |
|---|---|---|---|
| 11 | Schutzschicht | Sol-Gel SiOx | 2 - 3 µm |
| 10 | HI Schicht mit hohem Brechungsindex n = 1,8 - 3,2 | TiOx | 50 nm |
| 9 | LI Schicht mit niedrigem Brechungsindex n = 1,3 - 1,8 | SiOx | 60 nm |
| 8 | Diffusionsbarriere | | 0 |
| 7 | Agglomeration protection layer | CrOx | 2 - 10nm |
| 6 | optisch aktive Reflektorschicht aus hochreinem Metall | Ag | 90 - 200 nm |
| 5b | "seed layer 2" gesputterte Schicht aus Material der Reflektorschicht | Ag | 2 - 30 nm |
| 5a | "seed layer 1" | NiV 93:7% | 2 - 40nm |
| 4 | Haftschicht für Silber und Diffusionsbarriere | TiOx oder TiOxNy | 10 - 30 nm |
| 3 | Diffusionsbarriere | | |
| 2a | Anodisierungsschicht (versiegelt) | Al2O3 | 700 - 1200 nm |
| 1b | hochreines Aluminium walzplattiert | Al 99,9% | 0,05 - 0,3 mm |
| 1a | Kern | Aluminiumlegierung | 0,3 - 0,5 mm |
| 1c | reines Aluminium walzplattiert (optional) | | |
| 2b | Anodisierungsschicht | Al2O3 | 700 - 1200 nm |
| 12 | optionale Isolationsschicht | | |

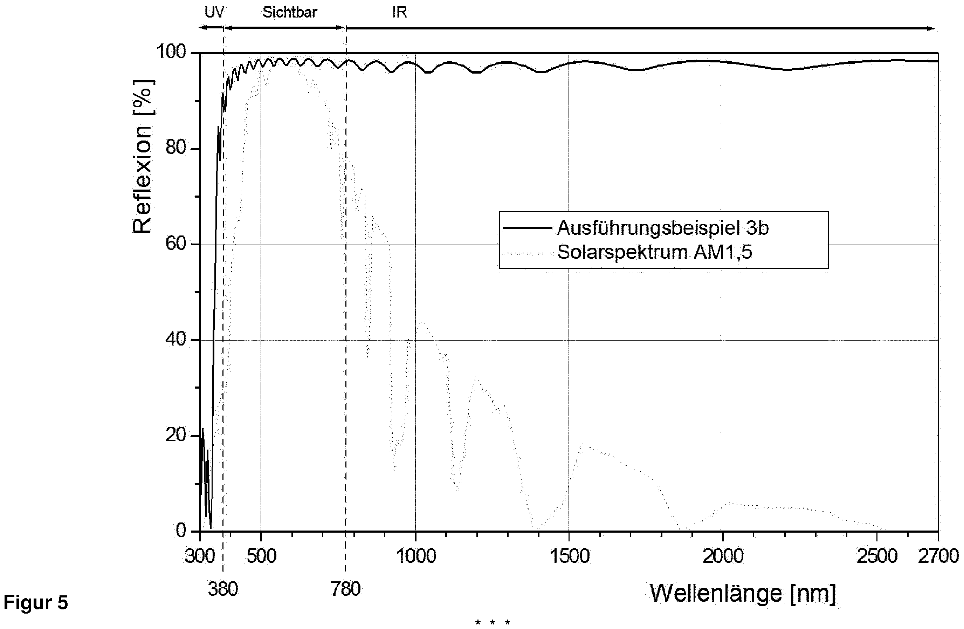

Dieses Schichtsystem besitzt eine solare Reflexion von über 92% nach ASTM 891-87 und einen diffusen Reflexionsanteil von unter 6% nach DIN 5036-3 (1° Apertur) (siehe Figur 5) Die Temperaturstabilität ist sehr gut. Bei einer Temperaturlagerung bei 250°C über 1000h nimmt die Totalreflexion maximal um 1% ab.

### Ausführungsbeispiel 3c

### Solarreflektor mit Lack-Schutzschicht

Das Schichtsystem weist noch eine Schutzschicht 11, besonders bevorzugt aus Lack und ganz besonders bevorzugt aus einem Fluoropolymer, um das System besonders gut gegen Verschmutzung und Korrosion zu schützen.

Das Schichtsystem des Ausführungsbeispiels 3c ist in der nachstehenden Tabelle aufgelistet:

| Nr. | **Ausführungsbeispiel 3c** | Material | Schichtdicke |
|---|---|---|---|
| 11 | Schutzschicht | Fluoropolymer | 0,5 - 8 µm |
| 10 | HI Schicht mit hohem Brechungsindex n = 1,8 - 3,2 | TiOx | 50 nm |
| 9 | LI Schicht mit niedrigem Brechungsindex n = 1,3 - 1,8 | SiOx | 60 nm |
| 8 | Diffusionsbarriere | | 0 |
| 7 | Agglomeration protection layer | CrOx | 2-10nm |
| 6 | optisch aktive Reflektorschicht aus hochreinem Metall | Ag | 90 - 200 nm |
| 5b | "seed layer 2" gesputterte Schicht aus Material der Reflektorschicht | Ag | 2-20nm |
| 5a | "seed layer 1" | NiV 93:7% | 2 - 40 nm |
| 4 | Haftschicht für Silber und Diffusionsbarriere | TiOx oder TiOxNy | 10 - 30 nm |
| 3 | Diffusionsbarriere | | |
| 2a | Anodisierungsschicht (versiegelt) | Al2O3 | 700 - 1200 nm |
| 1b | hochreines Aluminium walzplattiert | Al 99,9% | 0,05 - 0,3 mm |
| 1a | Kern | Aluminiumlegierung | 0,3 - 0,5 mm |
| 1c | reines Aluminium walzplattiert (optional) | | |
| 2b | Anodisierungsschicht | Al2O3 | 700 - 1200 nm |
| 12 | optionale Isolationsschicht | | |

Dieses Schichtsystem besitzt eine solare hemisphärische Reflexion von über 91% nach ASTM 891-87.

### Ausführungsbeispiel 3d

### Solarreflektor für den Einsatz in Glashäusern

Für bestimmte Anwendungen ist es vorteilhaft, Solarspiegel in Glashäusern zu installieren. Hier sind sie vor Sandstürmen besser geschützt. Allerdings müssen Sie hier höheren Temperaturen (bis zu 90°C) und teilweise einer höheren Luftfeuchte (bis zu 90%r.H.) als außen positionierte Spiegel widerstehen. Für diese Anwendungen haben sich besonders folgende Schichtsysteme als besonders widerstandsfähig erwiesen:

| Nr. | **Ausführungsbeispiel 3d-1** | Material | Schichtdicke |
|---|---|---|---|
| 11 | Schutzschicht | | |
| 10 | HI Schicht mit hohem Brechungsindex n = 1,8 - 3,2 | TiOx | 50 nm |
| 9 | LI Schicht mit niedrigem Brechungsindex n = 1,3 - 1,8 | SiOx | 60 nm |
| 8 | Diffusionsbarriere | TiOx | 5 - 25nm |
| 7 | Agglomeration protection layer | CrOx | 2-10nm |
| 6 | optisch aktive Reflektorschicht aus hochreinem Metall | Ag | 90 - 200 nm |
| 5b | "seed layer 2" gesputterte Schicht aus Material der Reflektorschicht | Ag | 2 - 30 nm |
| 5a | "seed layer 1" | NiV 93:7% | 2 - 40nm |
| 4 | Haftschicht für Silber und Diffusionsbarriere | TiOxNy | 10 - 30 nm |
| 3 | Diffusionsbarriere | | |
| 2a | Anodisierungsschicht (versiegelt) | Al2O3 | 700 - 1200 nm |
| 1b | hochreines Aluminium walzplattiert | Al 99,9% | 0,05 - 0,3 mm |
| 1a | Kern | Aluminiumlegierung | 0,3 - 0,5 mm |
| 1c | reines Aluminium walzplattiert (optional) | | |
| 2b | Anodisierungsschicht | Al2O3 | 700 - 1200 nm |
| 12 | optionale Isolationsschicht | | |

Dieses Schichtsystem besitzt eine Totalreflexion von über 98% nach DIN 5036-3 und eine solare Reflexion von über 94% nach ASTM 891-87.In einem "damp heat test" (85°C bei 85% Luftfeuchte) über 1000 Stunden nimmt sowohl die Totalreflexion nach DIN 5036-3 wie auch die solare Reflexion nach ASTM 891-87 um maximal 1% ab.

| Nr. | **Ausführungsbeispiel 3d-2** | Material | Schichtdicke |
|---|---|---|---|
| 11 | Schutzschicht | | |
| 10 | HI Schicht mit hohem Brechungsindex n = 1,8 - 3,2 | TiOx | 50 nm |
| 9 | LI Schicht mit niedrigem Brechungsindex n = 1,3 - 1,8 | SiOx | 50 - 60 nm |
| 8 | Diffusionsbarriere | | |
| 7 | Agglomeration protection layer | TiOx | 5 - 25 nm |
| 6 | optisch aktive Reflektorschicht aus hochreinem Metall | Ag | 90 - 200 nm |
| 5b | "seed layer 2" gesputterte Schicht aus Material der Reflektorschicht | Ag | 2 - 30 nm |
| 5a | "seed layer 1" | NiV 93:7% | 2 - 40nm |
| 4 | Haftschicht für Silber und Diffusionsbarriere | TiOxNy | 10 - 30 nm |
| 3 | Diffusionsbarriere | | |
| 2a | Anodisierungsschicht (versiegelt) | Al2O3 | 700 - 1200 nm |
| 1b | hochreines Aluminium walzplattiert | Al 99,9% | 0,05 - 0,3 mm |
| 1a | Kern | Aluminiumlegierung | 0,3 - 0,5 mm |
| 1c | reines Aluminium walzplattiert (optional) | | |
| 2b | Anodisierungsschicht | Al2O3 | 700 - 1200 nm |
| 12 | optionale Isolationsschicht | | |

Dieses Schichtsystem besitzt eine Totalreflexion von über 98% nach DIN 5036-3 und eine solare Reflexion von über 94% nach ASTM 891-87.

In einem "damp heat test" (85°C bei 85% Luftfeuchte) über 1000 Stunden nimmt sowohl die Totalreflexion nach DIN 5036-3 wie auch die solare Reflexion nach ASTM 891-87 um maximal 1% ab.

| Nr. | **Ausführungsbeispiel 3d-3** | Material | Schichtdicke |
|---|---|---|---|
| 11 | Schutzschicht | | |
| 10 | HI Schicht mit hohem Brechungsindex n = 1,8 - 3,2 | SiNx | 60 nm |
| 9 | LI Schicht mit niedrigem Brechungsindex n = 1,3 - 1,8 | SiOx | 60 nm |
| 8 | Diffusionsbarriere | | |
| 7 | Agglomeration protection layer | CrOx | 2-10nm |
| 6 | optisch aktive Reflektorschicht aus hochreinem Metall | Ag | 90 - 200 nm |
| 5b | "seed layer 2" gesputterte Schicht aus Material der Reflektorschicht | Ag | 2 - 30 nm |
| 5a | "seed layer 1" | NiV 93:7% | 2 - 40nm |
| 4 | Haftschicht für Silber und Diffusionsbarriere | TiOxNy | 10 - 30 nm |
| 3 | Diffusionsbarriere | | |
| 2a | Anodisierungsschicht (versiegelt) | Al2O3 | 700 - 1200 nm |
| 1b | hochreines Aluminium walzplattiert | Al 99,9% | 0,05 - 0,3 mm |
| 1a | Kern | Aluminiumlegierung | 0,3 - 0,5 mm |
| 1c | reines Aluminium walzplattiert (optional) | | |
| 2b | Anodisierungsschicht | Al2O3 | 700 - 1200 nm |
| 12 | optionale Isolationsschicht | | |

Die Siliziumitrid Schicht (10) wird dabei besonders bevorzugt mittels reaktivem Sputterverfahren unter Verwendung eines Targets aus Silicium mit einem Aluminiumanteil von 1% (Gewichtsprozent) aufgebracht. Hierbei wird Stickstoff als Reaktivgas eingeleitet.

Dieses Schichtsystem besitzt eine Totalreflexion von über 98% nach DIN 5036-3 und eine solare Reflexion von über 94% nach ASTM 891-87.

In einem "damp heat test" (85°C bei 85% Luftfeuchte) über 1000 Stunden nimmt sowohl die Totalreflexion nach DIN 5036-3 wie auch die solare Reflexion nach ASTM 891-87 um maximal 1% ab.

| Nr. | **Ausführungsbeispiel 3d-4** | Material | Schichtdicke |
|---|---|---|---|
| 11 | Schutzschicht | | |
| 10 | HI Schicht mit hohem Brechungsindex n = 1,8 - 3,2 | ZAO | 62 nm |
| 9 | LI Schicht mit niedrigem Brechungsindex n = 1,3 - 1,8 | SiOx | 60 nm |
| 8 | Diffusionsbarriere | | |
| 7 | Agglomeration protection layer | CrOx | 2-10nm |
| 6 | optisch aktive Reflektorschicht aus hochreinem Metall | Ag | 90 - 200 nm |
| 5b | "seed layer 2" gesputterte Schicht aus Material der Reflektorschicht | Ag | 2 - 30 nm |
| 5a | "seed layer 1" | NiV 93:7% | 2 - 40nm |
| 4 | Haftschicht für Silber und Diffusionsbarriere | TiOxNy | 10 - 30 nm |
| 3 | Diffusionsbarriere | | |
| 2a | Anodisierungsschicht (versiegelt) | Al2O3 | 700 - 1200 nm |
| 1b | hochreines Aluminium walzplattiert | Al 99,9% | 0,05 - 0,3 mm |
| 1a | Kern | Aluminiumlegierung | 0,3 - 0,5 mm |
| 1c | reines Aluminium walzplattiert (optional) | | |
| 2b | Anodisierungsschicht | Al2O3 | 700 - 1200 nm |
| 12 | optionale Isolationsschicht | | |

Die ZAO Schicht (10) (Zink-Aluminium-Oxid) wird hierbei bevorzugt mittels Sputterverfahren aufgebracht. Der Aluminiumanteil beträgt besonders bevorzugt 2% (Gewichtsprozent).

Dieses Schichtsystem besitzt eine Totalreflexion von über 98% nach DIN 5036-3 und eine solare Reflexion von über 94% nach ASTM 891-87.

In einem "damp heat test" (85°C bei 85% Luftfeuchte) über 1000 Stunden nimmt sowohl die Totalreflexion nach DIN 5036-3 wie auch die solare Reflexion nach ASTM 891-87 um maximal 1% ab.

| Nr. | **Ausführungsbeispiel 3d-5** | Material | Schichtdicke |
|---|---|---|---|
| 11 | Schutzschicht | | |
| 10 | HI Schicht mit hohem Brechungsindex n = 1,8 - 3,2 | ZAO | 62 nm |
| 9 | LI Schicht mit niedrigem Brechungsindex n = 1,3 - 1,8 | SiOx | 50 - 60 nm |
| 8 | Diffusionsbarriere | TiOx | 5 - 25nm |
| 7 | Agglomeration protection layer | CrOx | 2-10nm |
| 6 | optisch aktive Reflektorschicht aus hochreinem Metall | Ag | 90 - 200 nm |
| 5b | "seed layer 2" gesputterte Schicht aus Material der Reflektorschicht | Ag | 2 - 30 nm |
| 5a | "seed layer 1" | NiV 93:7% | 2 - 40nm |
| 4 | Haftschicht für Silber und Diffusionsbarriere | TiOxNy | 10 - 30 nm |
| 3 | Diffusionsbarriere | | |
| 2a | Anodisierungsschicht (versiegelt) | Al2O3 | 700 - 1200 nm |
| 1b | hochreines Aluminium walzplattiert | Al 99,9% | 0,05 - 0,3 mm |
| 1a | Kern | Aluminiumlegierung | 0,3 - 0,5 mm |
| 1c | reines Aluminium walzplattiert (optional) | | |
| 2b | Anodisierungsschicht | Al2O3 | 700 - 1200 nm |
| 12 | optionale Isolationsschicht | | |

Die ZAO Schicht (10) (Zink-Aluminium-Oxid) wird hierbei bevorzugt mittels Sputterverfahren aufgebracht. Der Aluminiumanteil beträgt besonders bevorzugt 2% (Gewichtsprozent).

Zusätzlich wird noch eine Diffusionsbarriereschicht (8) aus TiOx eingebracht.

Dieses Schichtsystem besitzt eine Totalreflexion von über 98% nach DIN 5036-3 und eine solare Reflexion von über 94% nach ASTM 891-87.

In einem "damp heat test" (85°C bei 85% Luftfeuchte) über 1000 Stunden nimmt sowohl die Totalreflexion nach DIN 5036-3 wie auch die solare Reflexion nach ASTM 891-87 um maximal 1% ab.

### Ausführungsbeispiel 3e

### Solarreflektor mit Aluminium-Reflektorschicht

| Nr. | **Ausführungsbeispiel 3e** | Material | Schichtdicke |
|---|---|---|---|
| 11 | Schutzschicht | | 0 |
| 10 | HI Schicht mit hohem Brechungsindex n = 1,8 - 3,2 | TiOx | 80 nm |
| 9 | LI Schicht mit niedrigem Brechungsindex n = 1,3 - 1,8 | SiOx | 60 nm |
| 8 | Diffusionsbarriere | | 0 |
| 7 | Agglomeration protection layer | CrOx | 2-10nm |
| 6 | optisch aktive Reflektorschicht aus hochreinem Metall | Al | 90 - 200 nm |
| 5b | "seed layer 2" gesputterte Schicht aus Material der Reflektorschicht | Al | 2-20nm |
| 5a | "seed layer 1" | NiV 93:7% | 2 - 40 nm |
| 4 | Haftschicht für Silber und Diffusionsbarriere | TiOx oder TiOxNy | 10 - 30 nm |
| 3 | Diffusionsbarriere | | |
| 2a | Anodisierungsschicht (versiegelt) | Al2O3 | 700 - 1200 nm |
| 1b | hochreines Aluminium walzplattiert | Al 99,9% | 0,05 - 0,3 mm |
| 1a | Kern | Aluminiumlegierung | 0,3 - 0,5 mm |
| 1c | reines Aluminium walzplattiert (optional) | | |
| 2b | Anodisierungsschicht | Al2O3 | 700 - 1200 nm |
| 12 | optionale Isolationsschicht | | |

Dieses Schichtsystem besitzt eine solare Reflexion von über 89% nach ASTM 891-87 (Siehe Figur 4).

### Ausführungsbeispiel 4

Spiegel für Farbräder in DLP - Laserprojektoren (englisch: Digital Light Processing)

Das Schichtsystem des Ausführungsbeispiels 4 ist in der nachstehenden Tabelle aufgelistet:

| Nr. | **Ausführungsbeispiel 4** | Material | Schichtdicke |
|---|---|---|---|
| 11 | Schutzschicht | | 0 |
| 10 | HI Schicht mit hohem Brechungsindex n = 1,8 - 3,2 | ZrOx | 60-80 nm |
| 9 | LI Schicht mit niedrigem Brechungsindex n = 1,3 - 1,8 | SiOx | 60 nm |
| 8 | Diffusionsbarriere | TiOx | 5 - 25nm |
| 7 | Agglomeration protection layer | CrOx | 2-10nm |
| 6 | optisch aktive Reflektorschicht aus hochreinem Metall | Ag | 90 - 200 nm |
| 5b | "seed layer 2" gesputterte Schicht aus Material der Reflektorschicht | Ag | 2-20nm |
| 5a | "seed layer 1" | NiV 93:7% | 2 - 40 nm |
| 4 | Haftschicht für Silber und Diffusionsbarriere | TiOx oder TiOxNy | 10 - 30 nm |
| 3 | Diffusionsbarriere | CrN | 10 - 30 nm |
| 2a | Anodisierungsschicht (versiegelt) | Al2O3 | 40 - 70 nm |
| 1b | hochreines Aluminium walzplattiert | Al 99,9% | 0,05 - 0,3 mm |
| 1a | Kern | Aluminiumlegierung | 0,4 - 0,7 mm |
| 1c | reines Aluminium walzplattiert (optional) | | |
| 2b | Anodisierungsschicht | Al2O3 | 40 - 70 nm |
| 12 | optionale Isolationsschicht | | |

## Patentansprüche

1. Schichtsystem, umfassend
ein metallisches Substrat (1) mit einer ersten Seite (A), wobei auf der ersten Seite (A) die folgenden Schichten in der angegebenen Reihenfolge von innen nach außen aufgebracht sind:
4) eine Schicht aus einem Material, ausgewählt unter substöchiometrischen Oxiden und Oxinitriden des Titans und des Zirkoniums oder unter Metallen, ausgewählt unter Titan, Zirkonium, Molybdän, Platin und Chrom oder einer Legierung unter Verwendung eines dieser Metalle oder aus mindestens zweien dieser Metalle,
5a) eine Schicht aus einer Nickel-Legierung mit Chrom, Aluminium, Vanadium, Molybdän, Kobalt, Eisen, Titan und/oder Kupfer als Legierungspartner, oder aus einem Metall, ausgewählt unter Kupfer, Aluminium, Chrom, Molybdän, Wolfram, Tantal, Titan, Platin, Ruthenium, Rhodium und Legierungen unter Verwendung eines dieser Metalle, oder aus mindestens zweien dieser Metalle, oder aus Eisen, Stahl oder Edelstahl,
6) eine optisch dichte Reflektorschicht aus einem hochreinen Metall,
7) eine Schicht, die ausgewählt ist unter substöchiometrischen Oxiden des Titans, Zirkoniums, Hafniums, Vanadiums, Tantals, Niobs oder Chroms und unter Metallen, ausgewählt unter Chrom, Titan, Zirkonium, Hafnium, Vanadium, Niob, Tantal, Wolfram, Molybdän, Rhodium und Platin und Legierungen unter Verwendung eines dieser Metalle oder aus mindestens zweien dieser Metalle,
9) eine Schicht mit niedrigerem Brechungsindex ("LI-Schicht") im Verhältnis zur sich direkt anschließenden Schicht 10) ("HI-Schicht"), und
10) eine sich direkt an Schicht 9) anschließende Schicht mit einem höheren Brechungsindex ("HI-Schicht") im Verhältnis zur Schicht 9) ("LI-Schicht").

2. Schichtsystem nach Anspruch 1, worin das Substrat (1) Aluminium, Kupfer oder Edelstahl enthält oder daraus besteht.

3. Schichtsystem nach Anspruch 2, worin das Substrat 1) aus den folgenden Komponenten aufgebaut ist:
1a) einem Kern aus Aluminium, einer Aluminiumlegierung, Kupfer, Molybdän, Titan, Tantal, Edelstahl, Stahl, Eisen, Weißblech oder einer Legierung unter Verwendung mindestens eines dieser Materialien oder aus mindestens zweien dieser Materialien,
2a/2b) einer auf einer Seite des Kerns (2a) oder auf beiden Seiten des Kerns (2a, 2b) vorhandenen Schicht aus Aluminiumoxid.

4. Schichtsystem nach Anspruch 3, worin der Kern einseitig oder beidseitig mit einer Walzplattierung (1b,1c) versehen ist, die sich jeweils zwischen dem Kern und der Schicht aus Aluminiumoxid befindet.

5. Schichtsystem nach Anspruch 4, worin die Walzplattierung (1b, 1c) aus hochreinem Aluminium mit einem Gehalt von mindestens 99,5 %, Aluminium besteht.

6. Schichtsystem nach einem der Ansprüche 3 bis 5, worin entweder der Kern des Substrats (1) und/oder die Walzplattierung (1b, 1c) aus Aluminium besteht und die Schicht aus Aluminiumoxid durch Anodisierung hergestellt wurde, die bevorzugt durch eine Behandlung mit heißem Wasser versiegelt wurde.

7. Schichtsystem nach einem der voranstehenden Ansprüche, worin
die Schicht 4) eine Dicke von 5 bis 50 nm, vorzugsweise von 10 bis 30 nm besitzt und/oder
die Schicht 5a) eine Dicke von 2 bis 40 nm, vorzugsweise von 5 bis 30 nm besitzt und/oder
die Schicht 6) eine Dicke im Bereich von 50 bis 200 nm, bevorzugt von 80 bis 180 nm besitzt, und/oder
die Schicht 7) eine Dicke von 2 bis 20 nm und bevorzugt von etwa 2 bis 10 nm besitzt, und/oder
die Schicht 9) eine Dicke von 10 bis 200 nm und vorzugsweise von 40 bis 100 nm besitzt, und/oder
die Schicht 10) eine Dicke von 10 bis 200 nm und vorzugsweise von 40 bis 100 nm besitzt.

8. Schichtsystem nach einem der voranstehenden Ansprüche, worin das Material der Schicht 4) ausgewählt ist unter TiOₓ und TiNₓO_{y}.

9. Schichtsystem nach einem der voranstehenden Ansprüche, worin das Material der Schicht 5a) ausgewählt ist unter einer nicht ferromagnetischen Nickel-Legierung, insbesondere NiV, Edelstahl und Kupfer.

10. Schichtsystem nach einem der voranstehenden Ansprüche, worin das hochreine Metall der Reflektorschicht 6) ausgewählt ist unter Metallen mit einem Reinheitsgrad von mindestens 99,9% und ausgewählt ist unter Silber, Aluminium, Gold, Platin, Rhodium, Molybdän und Chrom oder einer Legierung unter Verwendung eines dieser Metalle oder aus mindestens zweien dieser Metalle.

11. Schichtsystem nach Anspruch 10, worin das hochreine Metall der Reflektorschicht 6) ausgewählt ist unter Silber und Aluminium.

12. Schichtsystem nach einem der voranstehenden Ansprüche, worin die Schicht 7) aus unterstöchiometrischem Chromoxid oder Titanoxid gebildet wird.

13. Schichtsystem nach einem der voranstehenden Ansprüche, worin der Brechungsindex n der Schicht 9) zwischen 1,3 und 1,8 liegt und das Material der Schicht ausgewählt ist unter Metalloxiden, -fluoriden, -nitriden, -oxinitriden und -carbooxinitriden.

14. Schichtsystem nach Anspruch 13, worin das Material der Schicht 9) ausgewählt ist unter SiOₓ, Al₂O₃, MgF₂, AlF₃, CeF₃, YF₃, BaF₂ LaF₃, SiAlOₓ, TiAlOₓ und Borosilikatglas.

15. Schichtsystem nach einem der voranstehenden Ansprüche, worin der Brechungsindex n der Schicht 10) zwischen 1,8 und 3,2 liegt und das Material der Schicht ausgewählt ist unter Metalloxiden, -fluoriden, -nitriden, -oxinitriden, und -carbooxynitriden.

16. Schichtsystem nach Anspruch 15, worin das Material der Schicht 10) ausgewählt ist unter TiOₓ, TiAlOₓ, ZrOₓ, HfOₓ, La₂O₃, Y₂O₃, Bi₂O₃, ZnO, SnO₂, ZAO , besonders bevorzugt mit 8 Atom-% Al, Nb₂O₅, Y₂O₃ und Si₃N₄.

17. Schichtsystem nach einem der voranstehenden Ansprüche, zusätzlich umfassend eine oder mehrere der nachfolgenden Schichten:
3) zwischen der Schicht 2a) und der Schicht 4) eine weitere Schicht aus einer anorganischen Metallverbindung,
5b) direkt unterhalb der Reflexionsschicht 6) eine Metallschicht, die durch ein PVD-Verfahren aufgebracht wurde,
8) zwischen der Schicht 7) und der Schicht 9) eine Schicht mit einer chemischen Zusammensetzung, ausgewählt unter TiOx, TiAlnOxNy, TiOxNy, ZrOx, ZrAlnOxNy, ZrOxNy, ZAO, ZnO, Si₃N₄, Al₂O₃ und AlOₓN_{y},
11) eine nach außen hin abschließende Schutzschicht.

18. Schichtsystem nach Anspruch 17, worin
die Schicht 3) eine Dicke von 5 bis 50 nm besitzt und/oder
die Schicht 5b) eine Dicke von 2 bis 100 nm, bevorzugt von 5bis 40 nm besitzt, und/oder
die Schicht 8) eine Dicke von 2 bis 30 nm und bevorzugt von 10 bis 20 nm besitzt.

19. Schichtsystem nach Anspruch 17 oder 18, worin die Schicht 3) ausgewählt ist unter Nitriden und Oxinitriden sowie Zinkoxid-Aluminiumoxid (ZAO), die vorzugsweise reaktiv gesputtert wurde.

20. Schichtsystem nach Anspruch 19, worin die Nitride und Oxinitride der Schicht 3) ausgewählt sind unter Nitriden und Oxinitriden des Chroms, des Titans, des Titan-Aluminiums und des Aluminiums.

21. Schichtsystem nach einem der Ansprüche 17 bis 20, worin die Schicht 5b) auf den durch die Schicht 5a) bereitgestellten Kondensationskeimen aufwächst und aus demselben Metall besteht wie die Reflexionsschicht 6).

22. Schichtsystem nach Anspruch 21, worin die Schicht 5b) durch Sputtern aufgebracht wurde.

23. Schichtsystem nach Anspruch 1, wobei die Schicht 5a) aus Aluminium besteht, die Reflektorschicht 6) aus Aluminium gebildet ist und die Schicht 5a) aufgesputtert ist.

24. Schichtsystem nach einem der Ansprüche 1-20 oder 23, worin die Schicht 5a) aus gesputtertem Aluminium besteht, eine Schicht 5b) nicht vorhanden ist und die Schicht 6) aus aufgedampftem Aluminium besteht.

25. Schichtsystem nach einem der Ansprüche 17 bis 24, worin die Schicht 11) aus einem Fluorid, Oxid, Oxinitrid, Oxicarbonitrid oder DLC (diamond-like carbon) gebildet ist.

26. Schichtsystem nach Anspruch 25, worin das Material der Schicht 11) ausgewählt ist unter LaF₃, ZrOₓ, SiOₓ, SiO_{X}N_{y}C_{z}; SnO₂, In₂O₃, SnInOₓ, InZnOₓ (ITO) oder ZnAlOₓ (ZAO).

27. Schichtsystem nach Anspruch 26, worin das Material der Schicht 11) ein durch das Sol-Gel-Verfahren aufgebrachtes, dreidimensionales Oxid, vorzugsweise ein Silicat ist, das optional organische Komponenten aufweist, oder ein Lack, bevorzugt ein Fluorpolymer-Lack ist.

28. Verwendung des Schichtsystems nach einem der voranstehenden Ansprüche als Oberflächenreflektor, bevorzugt in Anwendungen mit LEDs, insbesondere MC - COB für LEDs, als Solarreflektor oder als Laserspiegel, insbesondere für Farbräder in DLP - Laserprojektoren.

## Claims

1. A layer system, comprising:
a metallic substrate (1) having a first side (A), wherein the following layers are applied on the first side (A) from the inside to the outside in the specified order:
4) a layer composed of a material selected from substoichiometric oxides and oxynitrides of titanium and zirconium or from metals, selected from among titanium, zirconium, molybdenum, platinum, and chromium or an alloy using one of these metals or of at least two of these metals,
5a) a layer composed of a nickel alloy having chromium, aluminum, vanadium, molybdenum, cobalt, iron, titanium, and/or copper as an alloying partner, or composed of a metal selected from copper, aluminum, chromium, molybdenum, tungsten, tantalum, titanium, platinum, ruthenium, rhodium, and alloys using one of these metals, or of at least two of these metals, or composed of iron, steel or stainless steel,
6) an optically dense, high-purity metal reflector layer,
7) a layer selected from substoichiometric oxides of titanium, zirconium, hafnium, vanadium, tantalum, niobium or chromium and from metals selected from chromium, titanium, zirconium, hafnium, vanadium, niobium, tantalum, tungsten, molybdenum, rhodium, and platinum and alloys using one of these metals or of at least two of these metals,
9) a layer having a lower refractive index ("LI layer") in relation to the directly adjoining layer 10) ("HI layer"), and
10) a layer directly adjoining layer 9) and having a higher refractive index ("HI layer") in relation to the layer 9) ("LI layer").

2. The layer system according to Claim 1, wherein the substrate (1) contains aluminum, copper or stainless steel or consists thereof.

3. The layer system according to Claim 2, wherein the substrate 1) is composed of the following components:
1a) a core composed of aluminum, an aluminum alloy, copper, molybdenum, titanium, tantalum, stainless steel, steel, iron, tinplate or an alloy using at least one of these materials or of at least two of these materials,
2a/2b) an aluminum oxide layer on one side of the core (2a) or on both sides of the core (2a, 2b).

4. The layer system according to Claim 3, wherein said core is provided with a roll-cladding (1b; 1c) on one or both sides, which are respectively arranged between said core and said aluminum oxide layer.

5. The layer system according to Claim 4, wherein said roll-cladding (1b; 1c) consists of high-purity aluminum having an aluminum content of at least 99.5%.

6. The layer system according to one of Claims 3 to 5, wherein either said core of the substrate (1) and/or said roll-cladding (1b; 1c) consists of aluminum and said aluminum oxide layer has been prepared through anodization, and which has preferably been sealed by treatment with hot water.

7. The layer system according to one of the preceding Claims, wherein
the layer 4) has a thickness of 5 to 50 nm, preferably of 10 to 30 nm, and/or
the layer 5a) has a thickness of 2 to 40 nm, preferably of 5 to 30 nm, and/or
the layer 6) has a thickness in the range of 50 to 200 nm, preferably of 80 to 180 nm, and/or
the layer 7) has a thickness of 2 to 20 nm and preferably of approx. 2 to 10 nm, and/or
the layer 9) has a thickness of 10 to 200 nm and preferably of 40 to 100 nm, and/or
the layer 10) has a thickness of 10 to 200 nm and preferably of 40 to 100 nm.

8. The layer system according to one of the preceding Claims, wherein the material of said layer 4) is selected from TiOₓ and TiNₓO_{y}.

9. The layer system according to one of the preceding Claims, wherein the material of said layer 5a) is selected from a non-ferromagnetic nickel alloy, particularly NiV, stainless steel, and copper.

10. The layer system according to one of the preceding Claims, wherein the high-purity metal of the reflector layer 6) is selected from metals having a degree of purity of at least 99.9% and is selected from silver, aluminum, gold, platinum, rhodium, molybdenum, and chromium or an alloy using one of these metals or of at least two of these metals.

11. The layer system according to Claim 10, wherein the high-purity metal of the reflector layer 6) is selected from silver and aluminum.

12. The layer system according to one of the preceding Claims, wherein said layer 7) is formed of substoichiometric chromium oxide or titanium oxide.

13. The layer system according to one of the preceding Claims, wherein the refractive index n of layer 9) is between 1.3 and 1.8 and the material of said layer is selected from metal oxides, metal fluorides, metal nitrides, metal oxynitrides, and metal carbooxynitrides.

14. The layer system according to Claim 13, wherein the material of said layer 9) is selected from SiOₓ, Al₂O₃, MgF₂, AlF₃, CeF₃, YF₃, BaF₂, LaF₃, SiAlOₓ, TiAlOₓ, and borosilicate glass.

15. The layer system according to one of the preceding Claims, wherein the refractive index n of said layer 10) is between 1.8 and 3.2 and the material of said layer is selected from metal oxides, metal fluorides, metal nitrides, metal oxynitrides, and metal carbooxynitrides.

16. The layer system according to Claim 15, wherein the material of said layer 10) is selected from TiOₓ, TiAlOₓ, ZrOₓ, HfOₓ, La₂O₃, Y₂O₃, Bi₂O₃, ZnO, SnO₂, ZAO having particularly preferably 8 at.% Al, Nb₂O₅, Y₂O₃, and Si₃N₄.

17. The layer system according to one of the preceding Claims, additionally comprising one or more of the following layers:
3) an additional layer composed of an inorganic metal compound between the layer 2a) and the layer 4),
5b) a metal layer, applied through a PVD process, directly below the reflector layer 6),
8) a layer having a chemical composition selected from TiOₓ, TiAlₙOₓN_{y}, TiOₓN_{y}, ZrOₓ, ZrAlₙOₓN_{y}, ZrOₓN_{y}, ZAO, ZnO, Si₃N₄, Al₂O₃, and AlOₓN_{y}, between the layer 7) and the layer 9),
11) an outer protective finish layer.

18. The layer system according to Claim 17, wherein
the layer 3) has a thickness of 5 to 50 nm, and/or
the layer 5b) has a thickness of 2 to 100 nm, preferably of 5 to 40 nm, and/or
the layer 8) has a thickness of 2 to 30 nm and preferably of 10 to 20 nm.

19. The layer system according to Claim 17 or 18, wherein the layer 3) is selected from nitrides and oxynitrides as well as zinc aluminum oxide (ZAO), which preferably have been reactively sputtered.

20. The layer system according to Claim 19, wherein the nitrides and oxynitrides of said layer 3) are selected from nitrides and oxynitrides of chromium, titanium, titanium-aluminum, and aluminum.

21. The layer system according to one of the Claims 17 to 20, wherein the layer 5b) grows on the condensation nuclei provided by layer 5a) and consists of the same metal as said reflector layer 6).

22. The layer system according to Claim 21, wherein the layer said 5b) has been applied through sputtering.

23. The layer system according to claim 1, wherein said layer 5a) consists of aluminum, said reflector layer 6) is formed of aluminum and said layer 5a) has been sputtered.

24. The layer system according to one of Claims 1-20 or 23, wherein the layer 5a) consists of sputtered aluminum, a layer 5b) is not present, and said layer 6) consists of vapor-deposited aluminum.

25. The layer system according to one of Claims 17 to 24, wherein said layer 11) is formed of a fluoride, oxide, oxynitride, oxycarbonitride, or DLC (diamond-like carbon).

26. The layer system according to Claim 25, wherein the material of said layer 11) is selected from LaF₃, ZrOₓ, SiOₓ, SiO_{X}N_{y}C_{z}, SnO₂, In₂O₃, SnInOₓ, InZnOₓ (ITO) or ZnAlOₓ (ZAO).

27. The layer system according to Claim 26, wherein the material of said layer 11) is a three-dimensional oxide applied via the sol-gel process, preferably a silicate optionally having organic components, or a lacquer, preferably a fluoropolymer lacquer.

28. Use of the layer system according to one of the preceding Claims as a surface reflector, preferably in applications with LEDs, particularly MC - COB for LEDs, as a solar reflector or as a laser mirror, in particular for color wheels in DLP - laser projectors.

## Revendications

1. Système de couches, comprenant
un substrat métallique (1) avec un premier côté (A), dans lequel les couches suivantes sont appliquées sur le premier côté (A) dans l'ordre indiqué de l'intérieur vers l'extérieur:
4) une couche composée d'un matériau sélectionné parmi les oxydes et les oxynitrures sous-stoechiométriques du titane et du zirconium ou parmi des métaux sélectionnés parmi le titane, le zirconium, le molybdène, le platine et le chrome ou un alliage utilisant un de ces métaux ou composé d'au moins deux de ces métaux;
5a) une couche composée d'un alliage de nickel avec du chrome, de l'aluminium, du vanadium, du molybdène, du cobalt, du fer, du titane et/ou du cuivre en tant que partenaires d'alliage, ou composé d'un métal sélectionné parmi le cuivre, l'aluminium, le chrome, le molybdène, le tungstène, le tantale, le titane, le platine, le ruthénium, le rhodium et des alliages utilisant un de ces métaux, ou composé d'au moins deux de ces métaux, ou de fer, d'acier ou d'acier inoxydable,
6) une couche réfléchissante optiquement dense composée d'un métal de grande pureté,
7) une couche qui est sélectionnée parmi les oxydes sous-stoechiométriques du titane, du zirconium, du hafnium, du vanadium, du tantale, du niobium ou du chrome et parmi des métaux sélectionnés parmi le chrome, le titane, le zirconium, le hafnium, le vanadium, le niobium, le tantale, le tungstène, le molybdène, le rhodium et le platine et des alliages utilisant un de ces métaux ou composé d'au moins deux de ces métaux,
9) une couche présentant un faible indice de réfraction ("couche LI") par rapport à la couche 10) qui suit directement ("couche HI"), et
10) une couche suivant directement la couche 9) avec un indice de réfraction plus élevé ("couche HI") par rapport à la couche 9) ("couche LI").

2. Système de couches selon la revendication 1, dans lequel le substrat (1) contient de l'aluminium, du cuivre ou de l'acier inoxydable ou en est constitué.

3. Système de couches selon la revendication 2, dans lequel le substrat (1) est constitué des composants suivants:
1a) un coeur composé d'aluminium, d'un alliage d'aluminium, de cuivre, de molybdène, de titane, de tantale, d'acier inoxydable, d'acier, de fer, de fer blanc ou d'un alliage utilisant au moins un de ces matériaux ou composé d'au moins deux de ces matériaux,
2a/2b) une couche composée d'oxyde d'aluminium présente sur un côté du coeur (2a) ou sur les deux côtés du coeur (2a, 2b).

4. Système de couches selon la revendication 3, dans lequel le coeur est muni sur un côté ou sur les deux côtés d'un plaquage par laminage (1b, 1c), qui se trouve respectivement entre le coeur et la couche composée d'oxyde d'aluminium.

5. Système de couches selon la revendication 4, dans lequel le plaquage par laminage (1b, 1c) se compose d'aluminium de grande pureté avec une teneur en aluminium d'au moins 99,5 %.

6. Système de couches selon l'une quelconque des revendications 3 à 5, dans lequel le coeur du substrat (1) et/ou le plaquage par laminage (1b, 1c) se compose d'aluminium et la couche composée d'oxyde d'aluminium a été produite par anodisation, qui a de préférence été colmatée par un traitement à l'eau chaude.

7. Système de couches selon l'une quelconque des revendications précédentes, dans lequel
la couche 4) présente une épaisseur de 5 à 50 nm, de préférence de 10 à 30 nm, et/ou
la couche 5a) présente une épaisseur de 2 à 40 nm, de préférence de 5 à 30 nm, et/ou
la couche 6) présente une épaisseur comprise dans la plage de 50 à 200 nm, de préférence de 80 à 180 nm, et/ou
la couche 7) présente une épaisseur de 2 à 20 nm et de préférence d'environ 2 à 10 nm, et/ou
la couche 9) présente une épaisseur de 10 à 200 nm et de préférence de 40 à 100 nm, et/ou
la couche 10) présente une épaisseur de 10 à 200 nm et de préférence de 40 à 100 nm.

8. Système de couches selon l'une quelconque des revendications précédentes, dans lequel le matériau de la couche 4) est sélectionné parmi TiOₓ et TiNₓO_{y}.

9. Système de couches selon l'une quelconque des revendications précédentes, dans lequel le matériau de la couche 5a) est sélectionné parmi un alliage de nickel non ferromagnétique, en particulier le NiV, un acier inoxydable et le cuivre.

10. Système de couches selon l'une quelconque des revendications précédentes, dans lequel le métal de grande pureté de la couche réfléchissante 6) est sélectionné parmi des métaux présentant un degré de pureté d'au moins 99,9 % et est sélectionné parmi l'argent, l'aluminium, l'or, le platine, le rhodium, le molybdène et le chrome ou un alliage utilisant un de ces métaux ou composé d'au moins deux de ces métaux.

11. Système de couches selon la revendication 10, dans lequel le métal de grande pureté de la couche réfléchissante 6) est sélectionné parmi l'argent et l'aluminium.

12. Système de couches selon l'une quelconque des revendications précédentes, dans lequel la couche 7) est formée d'oxyde de chrome ou d'oxyde de titane sous-stoechiométrique.

13. Système de couches selon l'une quelconque des revendications précédentes, dans lequel l'indice de réfraction n de la couche 9) se situe entre 1,3 et 1,8 et le matériau de la couche est sélectionné parmi les oxydes, les fluorures, les nitrures, les oxynitrures et les carbooxynitrures de métaux.

14. Système de couches selon la revendication 13, dans lequel le matériau de la couche 9) est sélectionné parmi SiOₓ, Al₂O₃, MgF₂, AlF₃, CeF₃, YF₃, BaF₂, LaF₃, SiAlOₓ, TiAlOₓ, et un verre au borosilicate.

15. Système de couches selon l'une quelconque des revendications précédentes, dans lequel l'indice de réfraction n de la couche 10) se situe entre 1,8 et 3,2 et le matériau de la couche est sélectionné parmi les oxydes, les fluorures, les nitrures, les oxynitrures et les carbooxynitrures de métaux.

16. Système de couches selon la revendication 15, dans lequel le matériau de la couche 10) est sélectionné parmi TiOₓ, TiAlOₓ, ZrOₓ, HfOₓ, La₂O₃, Y₂O₃, Bi₂O₃, ZnO, SnO₂, ZAO, en particulier de préférence avec 8 % atomiques de Al, Nb₂O₅, Y₂O₃ et Si₃N₄.

17. Système de couches selon l'une quelconque des revendications précédentes, comprenant en outre une ou plusieurs des couches suivantes:
3) entre la couche 2a et la couche 4) une autre couche composée d'un composé métallique inorganique,
5b) directement en dessous de la couche réfléchissante 6) une couche métallique qui a été déposée par un procédé PVD,
8) entre la couche 7) et la couche 9) une couche présentant une composition chimique sélectionnée parmi TiOₓ, TiAlₙOₓN_{y}, TiOₓN_{y}, ZrOₓ, ZrAlₙOₓN_{y}, ZrOₓN_{y}, ZAO, ZnO, Si₃N₄, Al₂O₃ et AlOₓN_{y},
11) une couche de protection terminale vers l'extérieur.

18. Système de couches selon la revendication 17, dans lequel
la couche 3) présente une épaisseur de 5 à 50 nm, et/ou
la couche 5b) présente une épaisseur de 2 à 100 nm, de préférence de 5 à 40 nm, et/ou
la couche 8) présente une épaisseur de 2 à 30 nm et de préférence de 10 à 20 nm.

19. Système de couches selon la revendication 17 ou 18, dans lequel la couche 3) est sélectionnée parmi des nitrures et des oxynitrures ainsi que l'oxyde de zinc-oxyde d'aluminium (ZAO), qui a été déposée de préférence par pulvérisation cathodique réactive.

20. Système de couches selon la revendication 19, dans lequel les nitrures et les oxynitrures de la couche 3) sont sélectionnés parmi les nitrures et les oxynitrures du chrome, du titane, du titane-aluminium et de l'aluminium.

21. Système de couches selon l'une quelconque des revendications 17 à 20, dans lequel la couche 5b) croît sur les germes de condensation préparés par la couche 5a) et se compose du même métal que la couche réfléchissante 6).

22. Système de couches selon la revendication 21, dans lequel la couche 5b) a été déposée par pulvérisation cathodique.

23. Système de couches selon la revendication 1, dans lequel la couche 5a) se compose d'aluminium, la couche réfléchissante 6) est formée d'aluminium et la couche 5a) est déposée par pulvérisation cathodique.

24. Système de couches selon l'une quelconque des revendications 1 à 20 ou 23, dans lequel la couche 5a) se compose d'aluminium déposé par pulvérisation cathodique, une couche 5b) n'est pas présente et la couche 6) se compose d'aluminium déposé par vaporisation.

25. Système de couches selon l'une quelconque des revendications 17 à 24, dans lequel la couche 11) est formée d'un fluorure, d'un oxyde, d'un oxynitrure, d'un oxycarbonitrure ou de DLC (carbone sous forme diamant).

26. Système de couches selon la revendication 25, dans lequel le matériau de la couche 11) est sélectionné parmi LaF₃, ZrOₓ, SiOₓ, SiOₓN_{y}C_{z}; SnO₂, In₂O₃, SnInOₓ, InZnOₓ(ITO) ou ZnAlOₓ (ZAO).

27. Système de couches selon la revendication 26, dans lequel le matériau de la couche 11) est un oxyde tridimensionnel déposé par un procédé sol-gel, de préférence un silicate, qui présente en option des composants organiques, ou est une laque, de préférence une laque fluoropolymère.

28. Utilisation du système de couches selon l'une quelconque des revendications précédentes en tant que réflecteur de surface, de préférence dans des applications utilisant des LED, en particulier des puces MC-COB pour des LED, en tant que réflecteur solaire ou en tant que miroir laser, en particulier pour des roues chromatiques dans des projecteurs laser DLP.
